# EUROPEAN PATENT SPECIFICATION

(11) **EP 3 261 294 B1**
(45) Date of publication and mention of the grant of the patent: **04.12.2019**
(21) Application number: 17181921.2
(22) Date of filing: 06.06.2011
(51) Int. Cl.: H04L 12/26, H04L 12/46, H04L 12/931, H04L 12/721, H04L 12/761

(54) **REMOTE PORT MIRRORING USING TRILL**
SPIEGELUNG EINES ENTFERNTEN PORTS MIT TRILL
MISE EN MIROIR DES PORTS DISTANTS À L'AIDE DE TRILL

(30) Priority: 08.06.2010 US 352723 P; 08.06.2010 US 352731 P; 08.06.2010 US 352727 P; 08.06.2010 US 352726 P; 08.06.2010 US 352746 P; 08.06.2010 US 352790 P; 08.09.2010 US 380820 P; 09.09.2010 US 381353 P; 23.12.2010 US 201061427044 P; 23.12.2010 US 201061427034 P; 23.12.2010 US 201061427050 P; 23.12.2010 US 201061427057 P; 18.02.2011 US 201113030688; 18.02.2011 US 201113030806; 09.03.2011 US 201113044326; 09.03.2011 US 201113044301; 15.03.2011 US 201113048817; 17.03.2011 US 201113050102
(43) Date of publication of application: 27.12.2017
(62) Divisional of application: 11727050.4
(73) Proprietor: Avago Technologies International Sales Pte. Limited, Singapore 768923 (SG)
(72) Inventor: YU, Shunjia, San Jose, CA 95131 (US); GHANWANI, Anoop, Rocklin, CA 95765 (US); KOGANTI, Phanidhar, Sunnyvale, CA 94086 (US); RAMAN, Mythilikanth, San Jose, CA 95131 (US); KRISHNAMURTHY, Rajiv, San Jose, CA 95131 (US); TERRY, John Michael, San Jose, CA 95125 (US); VENKATESAN, Nagarajan, Santa Clara, CA 95059 (US); CHEUNG, Wing, Fremont, CA 94539 (US); CHENG, Joseph Juh-En, Palo Alto, CA 94309 (US); CHATWANI, Dilip, San Jose, CA 95129 (US); VARANASI, Surya P, Dublin, CA 94568 (US)
(74) Representative: Bosch Jehle Patentanwaltsgesellschaft mbH

(56) References cited:
- US-A- 6 041 042
- US-A1- 2008 304 423
- US-A1- 2009 080 338
- RADIA PERLMAN INTEL LABS DONALD EASTLAKE 3RD STELLAR SWITCHES DINESH G DUTT SILVANO GAI CISCO SYSTEMS ANOOP GHANWANI BROCADE: "RBridges: Base Protocol Specification; draft-ietf-trill-rbridge-proto col-16.txt", RBRIDGES: BASE PROTOCOL SPECIFICATION; DRAFT-IETF-TRILL-RBRIDGE-PROTO COL-16.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 16, 5 March 2010 (2010-03-05), pages 1-117, XP015067710,
- 68- Cisco: "Configuring Local SPAN, RSPAN and ERSPAN", , 21 August 2007 (2007-08-21), XP55136031, Internet Article Retrieved from the Internet: URL:http://www.cisco.com/c/en/us/td/docs/s witches/lan/catalyst6500/ios/12-2SX/config uration/guide/book/span.pdf [retrieved on 2014-08-22]

## Description

### Technical Field

This disclosure relates to computer networking. More specifically, this disclosure relates to methods and apparatuses for processing and/or forwarding packets.

### BACKGROUND

### Related Art

Computer networks have become critical elements of a company's information technology infrastructure. The insatiable demand for bandwidth and the ever increasing size and complexity of computer networks has created a need for increasing the bandwidth and improving manageability of computer networks.

The manageability of computer networks can be improved by using network virtualization. In network virtualization, a large and complex network can be carved up into multiple virtual networks to facilitate manageability. Unfortunately, improving manageability using this approach can increase the amount of processing and resources required at each switch.

US 6,041,042 shows a method and an apparatus for remote monitoring of data on a communications network, wherein data transmitted and received by a port can be examined at a location other than on the device having the examined port. A method includes the steps of selecting a mirror-from-port of a first device from which to mirror packets, selecting an analyzer port of a second device to which to mirror the packets, and mirroring the packets from the mirror-from-port of the first device to the analyzer port of the second device. The mirroring step may include establishing a connection path through the network, encapsulating the packets with a connection path identifier, and sending the encapsulated packets through the network to the second device. The benefits include ease of use, fewer resources (analyzers) needed, time savings, and not having to dedicate a physical port as the mirror-to-port on the device.

### SUMMARY

The present invention provides a switch as defined by independent claim 1 and a method as defined by independent claim 5.

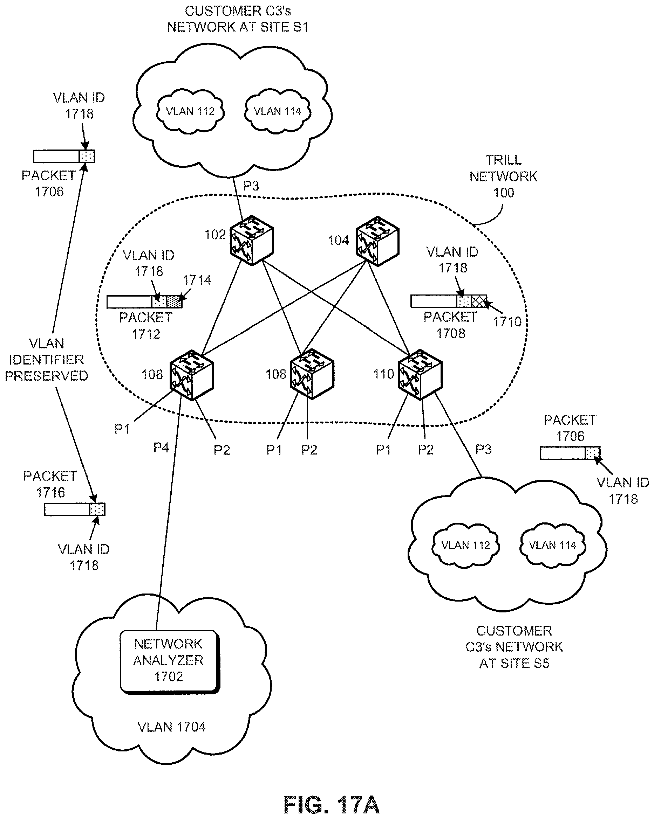

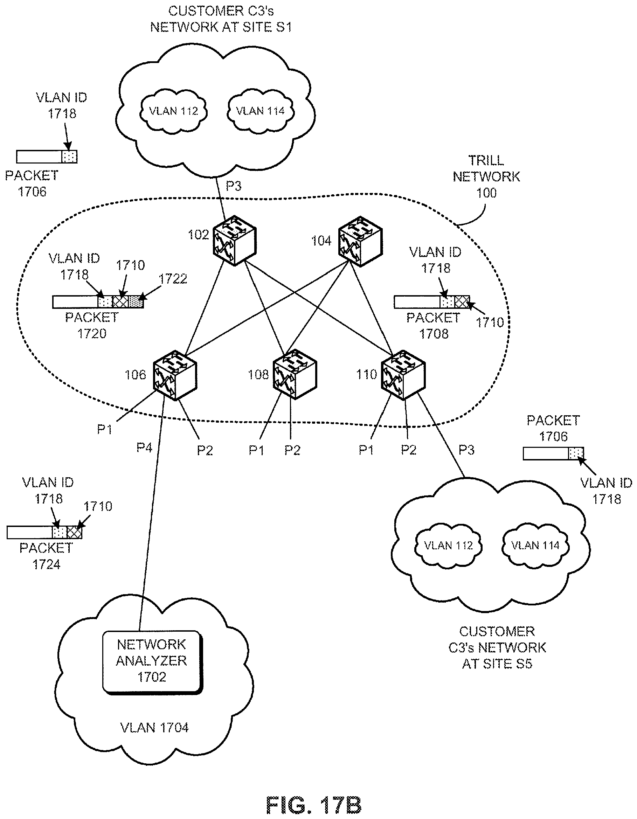

In the following, a plurality of so called embodiments of the invention are described. However, only the embodiments related to remote port mirroring, described in figures 17A and 17B and in the corresponding passages of the description, are covered by the claims. All other embodiments are not covered by the claims but are useful for understanding the invention.

### BRIEF DESCRIPTION OF THE FIGURES

FIG. 1 illustrates a TRILL network in accordance with some embodiments of the present invention.
FIG. 2 illustrates a portion of an Ethernet packet which includes a TRILL header in accordance with some embodiments of the present invention.
FIG. 3 illustrates a switch in accordance with some embodiments of the present invention.
FIG. 4A presents a flowchart that illustrates a process for forwarding packets based on an internal virtual network identifier in accordance with some embodiments of the present invention.
FIG. 4B presents a flowchart that illustrates a process for applying a policy to a packet based on an internal policy identifier in accordance with some embodiments of the present invention.
FIG. 5 illustrates a system in accordance with some embodiments of the present invention.
FIG. 6A illustrates an exemplary mapping between packet header information and internal virtual network identifiers in accordance with some embodiments of the present invention.
FIG. 6B illustrates examples of mappings between packet header information and internal policy identifiers in accordance with some embodiments of the present invention.
FIG. 7 illustrates how an RBridge can perform network layer multicasting in a TRILL network in accordance with some embodiments of the present invention.
FIG. 8 illustrates a switch in accordance with some embodiments of the present invention.
FIG. 9A presents a flowchart that illustrates a process for forwarding packets based on an internal multicast group identifier in accordance with some embodiments of the present invention.
FIG. 9B presents a flowchart that illustrates a process for performing network layer multicasting in a TRILL network in accordance with some embodiments of the present invention.
FIG. 10 illustrates a switch in accordance with some embodiments of the present invention.
FIG. 11 presents a flowchart that illustrates a process for flooding packets on a per-virtual-network basis in accordance with some embodiments of the present invention.
FIG. 12 illustrates how flooding can be performed on a per-virtual-network basis in accordance with some embodiments of the present invention.
FIG. 13 illustrates a switch in accordance with some embodiments of the present invention.
FIG. 14 illustrates an exemplary mapping mechanism in accordance with some embodiments of the present invention.
FIG. 15 presents a flowchart that illustrates a process for processing packets in accordance with some embodiments of the present invention.
FIG. 16 illustrates a conventional remote port mirroring system.
FIG. 17A illustrates a remote port mirroring system which uses encapsulation in accordance with some embodiments of the present invention.
FIG. 17B illustrates a remote port mirroring system which uses encapsulation in accordance with some embodiments of the present invention.
FIG. 18 illustrates a switch in accordance with some embodiments of the present invention.
FIG. 19 presents a flowchart that illustrates a process for performing remote port mirroring in accordance with some embodiments of the present invention.
FIG. 20 illustrates a system in accordance with some embodiments of the present invention.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not limited to the embodiments shown, but is to be accorded the widest scope consistent with the principles and features disclosed herein.

### TRILL (Transparent Interconnection of Lots of Links)

TRILL combines the advantages of bridging and routing. TRILL is described, for instance, in PERLMAN, R., "RBridges: Base Protocol Specification; draft-ietf-trill-rbridge-proto col-16.txt", 5 March 2010 (2010-03-05) pages 1-117, XP015067710. Bridges (e.g., devices that perform layer-2 forwarding) can transparently connect multiple links to create a single local area network. Without TRILL, bridges use the spanning tree protocol (STP) which restricts the topology on which traffic is forwarded to a tree to prevent loops. Unfortunately, forwarding the traffic over a tree causes traffic concentration on the links that correspond to the tree edges, leaving other links completely unutilized. Unlike bridges, Internet Protocol (IP) routers (e.g., devices that perform IP forwarding) do not need to create a spanning tree for forwarding traffic. However, routers that forward IP traffic require more configuration than bridges, and moving nodes in an IP network requires changing the IP address of the nodes. Each link in an IP network is associated with an address prefix, and all nodes on that link must have that IP prefix. If a node moves to another link that has a different IP prefix, the node must change its IP address. Unless otherwise stated, the term "IP" refers to both "IPv4" and "IPv6" in this disclosure.

A TRILL network includes "routing bridges" (referred to as RBridges) which route packets, but like bridges, learn layer-2 address locations through receipt of packets. Since packets are routed, packet forwarding is not limited to a spanning tree. Also, since a hop count is included in a TRILL packet, packets do not circulate forever in the network in the presence of loops. Further, since the layer-2 address locations are learned, a TRILL network allows IP nodes to move from one link to another in the network without any restrictions.

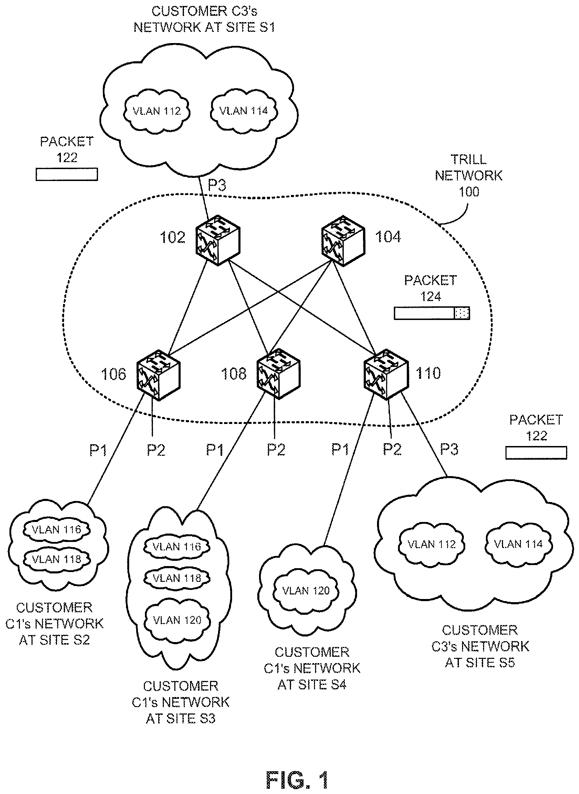

FIG. 1 illustrates a TRILL network in accordance with some embodiments of the present invention. TRILL network 100 can be a service provider's network which includes core RBridges 102 and 104 and edge RBridges 106, 108, and 110. RBridges 102, 106, 108, and 110 are coupled to customer devices, whereas RBridge 104 is not. Specifically, port P3 on RBridge 102 can be coupled to a device in customer C3's network at site S1; ports labeled P1 on RBridges 106, 108, and 110 can be coupled to devices in customer C1's networks at sites S2, S3, and S4, respectively; and port P3 on RBridge 110 can be coupled to a device in customer C3's network at site S5. Note that the port numbers in FIG. 1 match the customer numbers, i.e., ports labeled P1 are associated with customer C1, ports labeled P3 are associated with customer C3, etc. This has been done for ease of discourse. In general, any port on any RBridge can potentially be assigned to one or more virtual networks that are associated with one or more customers.

A virtual local area network (VLAN) in a customer's network may span multiple customer sites. For example, VLANs 112 and 114 in customer C3's network include nodes in sites S1 and S5. Similarly, VLANs 116 and 118 in customer C1's network include nodes in sites S2 and S3, and VLAN 120 in customer C1's network includes nodes in sites S3 and S4.

Nodes that belong to the same VLAN, but which are located at different sites, can communicate with each other transparently through TRILL network 100. Specifically, the ingress RBridge can encapsulate a packet (e.g., an Ethernet packet with or without one or more VLAN tags) received from a customer and route the packet within TRILL network 100 using a TRILL header. The egress RBridge can then strip the TRILL header and send the original customer packet on the appropriate port. For example, packet 122 can originate in customer C3's network at site S1, and be received on port P3 of RBridge 102 with a VLAN tag associated with VLAN 112. Next, RBridge 102, which is the ingress RBridge for this packet, can encapsulate packet 122 by adding a TRILL header to obtain packet 124 (the TRILL header is the shaded portion in packet 124). Next, the TRILL header of packet 124 can be used to route packet 124 through TRILL network 100 until packet 124 reaches RBridge 110, which is the egress RBridge for the packet. RBridge 110 can then strip away the TRILL header on packet 124 to obtain the original packet 122, and send packet 122 on port P3 so that the packet can be delivered to the intended destination in VLAN 112 in customer C3's network at site S5. In FIG. 1, the packet that is received at the ingress RBridge and the packet that is sent from the egress RBridge are shown to be the same. However, these packets can be different. For example, if VLAN translation is being performed, then the packet that is received at the ingress RBridge and the packet that is sent from the egress RBridge can have different VLAN tags.

Details of the TRILL packet format and RBridge forwarding can be found in IETF draft "RBridges: Base Protocol Specification," available at http://tools.ietf.org/html/draft-ietf-trill-rbridgc-protocol-16, which is incorporated herein by reference.

Although some examples in this disclosure are presented in the context of a TRILL network that includes RBridges, the present invention is not limited to TRILL networks or RBridges. The terms "frame" or "packet" generally refer to a group of bits. The use of the term "frame" is not intended to limit the present invention to layer-2 networks. Similarly, the use of the term "packet" is not intended to limit the present invention to layer-3 networks. Unless otherwise stated, the terms "frame" or "packet" may be substituted with other terms that refer to a group of bits, such as "cell" or "datagram."

### Network Virtualization

Network virtualization enables a service provider to provision virtual networks (VNs) over a common network infrastructure. To a user on a VN it appears as if the traffic is being carried over a separate network that has been specifically built for the user. However, in reality, the traffic from multiple VNs may be carried over a common network infrastructure.

Network virtualization has many uses. For example, network virtualization can be used to create multiple, logically distinct networks on the same physical network to comply with government regulations. Other uses of network virtualization include, but are not limited to, partitioning network resources between different organizations in a company thereby reducing network costs and simplifying network management.

One approach for addressing the problem that is solved by network virtualization is to duplicate resources (e.g., routers, switches, etc.) in the network so that the resources can be provisioned on a per-customer basis. However, this approach is impractical because it is costly and it is not scalable.

Some embodiments of the present invention implement network virtualization and/or partitioning in the TRILL network by embedding a VPN identifier in a TRILL option field in the TRILL header. Specifically, the ingress RBridge can determine a VPN identifier for each packet it receives from a customer, and embed the VPN identifier in a TRILL option field in the TRILL header. Next, the VPN idenifier can be used to support network virtualization and/or partitioning in the TRILL network. Specifically, once the VPN identifier is embedded into the TRILL header, RBridges in the TRILL network can use the VPN identifier to determine how to handle the packet.

In some embodiments, the system can use a service provider VLAN identifier to implement network virtualization and/or partitioning. Specifically, ingress RBridges can add appropriate S-tags to packets received from customers (note that the S-tag based approach may not work for incoming packets that already have an S-tag). Next, the S-tag can be used to implement virtualization and/or partitioning in the network.

### Packet Format

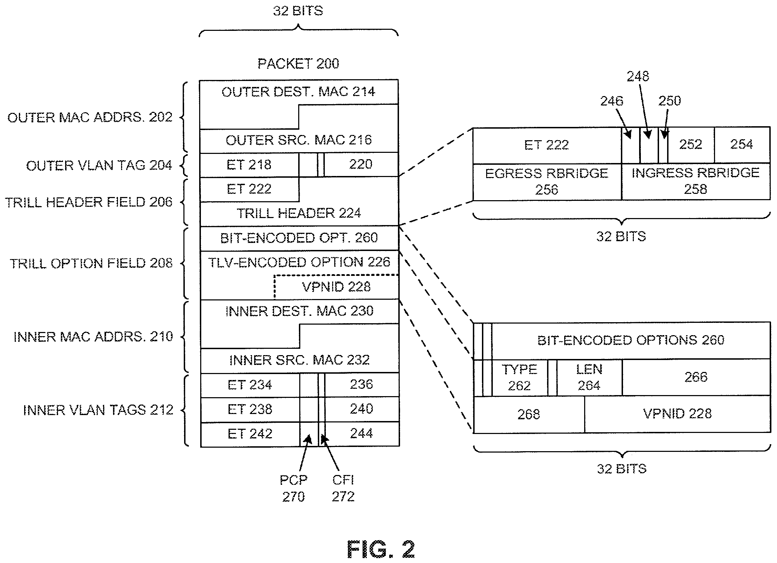

FIG. 2 illustrates a portion of an Ethernet packet which includes a TRILL header in accordance with some embodiments of the present invention. The packet shown in FIG. 2 is for illustration purposes only, and is not intended to limit the present invention.

Packet 200 can include one or more of the following fields: outer MAC (medium access control) addresses 202, outer VLAN tag 204, TRILL header field 206, TRILL option field 208, inner MAC addresses 210, and inner VLAN tags 212. Typically, the packet is transmitted from top to bottom, i.e., the bits associated with outer MAC addresses 202 will appear on the transmission medium before the bits associated with outer VLAN tag 204 appear on the transmission medium, and so forth. The contents of these fields and their uses are discussed below.

Outer MAC addresses 202 can include outer destination MAC address 214 and outer source MAC address 216. These MAC addresses and outer VLAN tag 204 typically change at each TRILL hop as the packet traverses the service provider's network. Specifically, at each hop, outer source MAC address 216 is associated with the MAC address of the source node (e.g., RBridge) for that hop, outer destination MAC address 214 is associated with the MAC address of the destination node (e.g., RBridge) for that hop, and outer VLAN tag 204 is associated with the VLAN that includes the source node and the destination node for that hop.

Outer VLAN tag 204 can include Ethernet type field 218 and outer VLAN identifier 220. The value of Ethernet type field 218 can indicate that the next field is a VLAN identifier. VLAN identifier 220 can be used in the service provider's network to create multiple broadcast domains.

TRILL header field 206 can include Ethernet type field 222 and TRILL header 224. The value of Ethernet type field 222 can indicate that the next field is a TRILL header. TRILL header 224 can include information for routing the packet through a TRILL network that is embedded in the service provider's network. Specifically, as shown in FIG. 2, TRILL header 224 can include version field 246 which indicates the TRILL version, reserved field 248 which may be reserved for future use, multicast field 250 which indicates whether this packet is a multicast packet, TRILL option length 252 which indicates the length (in terms of 32-bit words) of any TRILL option field that follows the TRILL header, and hop count 254 which may be decremented at each RBridge as the packet traverses the service provider's network.

TRILL header 224 also includes egress RBridge nickname 256 and ingress RBridge nickname 258. Ingress RBridge nickname 258 corresponds to the ingress RBridge which receives the packet from the customer's network, and, for unicast packets, egress RBridge nickname 256 corresponds to the egress RBridge which sends the packet to the customer's network. For multicast packets, egress RBridge nickname 256 corresponds to the RBridge which is the root of the multicast tree on which the packet is to be forwarded. For example, in FIG. 1, when packet 122 is received at ingress RBridge 102, ingress RBridge 102 can use the header information in packet 122 to determine that packet 122 needs to be routed to egress RBridge 110. Next, ingress RBridge 102 can add TRILL header field 206 to packet 122 to obtain packet 124. Specifically, RBridge 102 can set ingress RBridge nickname 258 in packet 124's TRILL header to RBridge 102's nickname, and set egress RBridge nickname 256 in packet 124's TRILL header to RBridge 110's nickname. RBridge 102 can then forward packet 124 based solely or partly on packet 124's TRILL header.

TRILL option field 208 can include bit-encoded options and one or more options encoded in a TLV (type-length-value) format. Specifically, TRILL option field 208 can include bit-encoded options 260 which are one-bit option flags, and TLV-encoded option 226. For example, a 20-bit VPN identifier can be encoded as a TLV-encoded option. Specifically, the value of type field 262 can indicate that this option specifies a VPN identifier. Length field 264 can indicate the length of the data portion of the TLV-encoded option in octets. In the packet shown in FIG. 2, TLV-encoded option 226 is used for specifying a 20-bit VPN identifier, and length field 264 is set to the value 0x6. The data portion of TLV-encoded option 226 begins immediately after length field 264. Specifically, in the packet shown in FIG. 2, the total length (in octets) of fields 266, 268, and 228 is equal to 0x6 as specified by length field 264. Further, as shown in FIG. 2, the last 20 bits of the data portion in TLV-encoded option 226 can be used for specifying VPN identifier 228.

Note that a 20-bit VPN identifier can be specified using a smaller data portion, e.g., only 0x3 octets instead of 0x6 octets. However, some embodiments use the following non-obvious insight: it may be desirable to align the 20-bit VPN identifier with the word boundary to simplify chip design and/or to improve performance. Thus, in some embodiments, 0x6 octets are used instead of 0x3 octets so that the 20-bit VPN identifier is aligned with a 32-bit word boundary. For example, as shown in FIG. 2, VPN identifier 228 is aligned with the 32-bit word boundary.

Inner MAC addresses 210 can include inner source MAC address 232 and inner destination MAC address 230. Inner MAC addresses 210 can be the MAC addresses that were present in the header of the packet that was received from the customer's network. For example, in FIG. 1, suppose a source node in VLAN 112 in customer C3's network at site S1 sends a packet to a destination node in VLAN 112 in customer C3's network at site S5. In this scenario, inner source MAC address 232 can correspond to the source node at site S1, and inner destination MAC address 230 can correspond to the destination node at site S5.

Inner VLAN tags 212 can include one or more VLAN tags. For example, inner VLAN tags 212 can include an S-tag which includes Ethernet type field 234 and S-VLAN-identifier 236, a C-tag which includes Ethernet type field 238 and C-VLAN-identifier 240, and another tag which includes Ethernet type field 242 and VLAN identifier 244. Each VLAN tag in outer VLAN tag 204 and inner VLAN tags 212 can also include a three-bit Priority Code Point (PCP) field (also referred to as the "priority" or "priority bits" in this disclosure), e.g., PCP 270, and a one-bit CFI field, e.g., CFI 272. When an S-tag is used, the CFI field can carry a drop eligibility indicator (DEI) bit. The values in Ethernet type fields (e.g., 234, 238, and 242) can indicate the type of VLAN tag that follows. For example, Ethernet type field 234 and 238 can indicate a VLAN identifier for an S-tag and a VLAN identifier for the C-tag follow the respective Ethernet type fields. The S-tag and the C-tag can be used by the customer to create a stacked-VLAN architecture, e.g., as defined in the Provider Bridging standard. The S-tag may also be used by the service provider to implement network virtualization and/or partitioning. Packet 200 can also include other tags, each tag having a tag-type field which indicates the type of the tag, and a field that stores contents (e.g., an identifier) related to the tag. For example, packet 200 can include a 32-bit congestion-notification-tag (CN-tag) which includes a 16-bit tag-type field and a 16-bit flow-identifier. The congestion-notification-tag may be used by the customer to manage network congestion.

Note that a packet may or may not include all of the fields shown in FIG. 2. For example, in some embodiments, a packet may not include one or more of inner VLAN tags 212 and/or outer VLAN tag 204. Further, certain combinations of fields may not be allowed in some embodiments. For example, in some embodiments, a packet may include either an S-tag or a TRILL option field, but not both. Additionally, the values of some fields may be related to each other. For example, in some embodiments, S-VLAN-identifier 236 may be copied into the 12 least significant bits of VPNID 228.

VLAN tagging is specified in IEEE (Institute of Electrical and Electronics Engineers) standard IEEE 802.1Q. The earlier versions of the standard, including and up to IEEE 802.1 Q-2005 of this standard describes how a single VLAN tag can be added to an Ethernet packet to create multiple broadcast domains within the same local area network (LAN). The term Provider Bridging refers to an amendment of this standard which allows an S-tag (a service VLAN tag is sometimes referred to as a provider tag) to be stacked in a single Ethernet packet. Provider Bridging enables a service provider to carry VLAN traffic from multiple customers on a shared network infrastructure without restricting the VLAN address space available to each customer. Further details on Provider Bridging can be found in the specification for standard IEEE 802.1ad.

In some embodiments, the system can add a TRILL header to a Provider Bridging packet. In these embodiments, the packet received from the customer network may include an S-tag. The service provider's network may then add a TRILL header to the packet. In some embodiments, the system may ensure that the priority bits in the outermost VLAN tag are the same as the priority bits in the S-tag.

### Internal Virtual Network Identifier and Internal Policy Identifier

When a packet is received on an input port, the packet header is processed by the switch to determine the output port on which the packet is to be forwarded. Oftentimes, the forwarding mechanism (e.g., an integrated circuit specifically designed for performing forwarding lookups) is the bottleneck in the data path. Consequently, increasing the processing speed and decreasing the size and complexity of the forwarding mechanism is usually very important.

One approach for supporting network virtualization in an RBridge is to directly use the VPN identifier and/or other fields in the packet header to perform forwarding lookup. Unfortunately, this approach can require the forwarding mechanism to use a large number of bits to perform the forwarding lookups. As a result, it can be very costly to design a switch that performs forwarding using this approach.

Some embodiments of the present invention determine an internal virtual network identifier based on the port on which a packet is received and/or one or more fields (which may include the VPN identifier) in the packet. Next, the packet is forwarded based on the internal virtual network identifier. The length (in terms of bits) of the internal virtual network identifier can be less than the combined length of the one or more fields in the packet that are used for determining the internal virtual network identifier. This reduction in length can increase the processing speed of the forwarding mechanism, and decrease the overall size and complexity of the implementation.

There are at least two non-obvious insights that allow us to map the one or more fields in the packet to a shorter sized internal virtual network identifier without significantly affecting network virtualization functionality. The first non-obvious insight is that, even though each customer is given the capability to create a large number of virtual networks, it is unlikely that each and every customer will provision a large number of virtual networks. For example, even though each customer may be given the capability to create 4K VLANs, it is unlikely that each and every customer will provision 4K VLANs. Hence, the internal virtual network identifier does not have to be long enough to handle cases in which each customer provisions 4K VLANs. Note that the entire 4K VLAN address space is still available to each customer.

The second non-obvious insight is that multiple virtual networks can be mapped to a single internal virtual network identifier. Note that an RBridge needs to assign a unique internal virtual network identifier for a virtual network if the RBridge needs to forward packets to a customer on a local port. For example, an ingress or egress RBridge may assign a unique internal virtual network identifier for each virtual network whose packets are forwarded to a customer-facing port on the RBridge. However, if the RBridge is not an ingress or egress RBridge for a set of virtual networks, then the RBridge can map the set of virtual networks to a common "pass-through" internal virtual network identifier. For example, the RBridge can map multiple (VLAN identifier, VPN identifier) tuples to the same internal virtual network identifier if the RBridge is not an ingress or egress RBridge for these (VLAN identifier, VPN identifier) tuples.

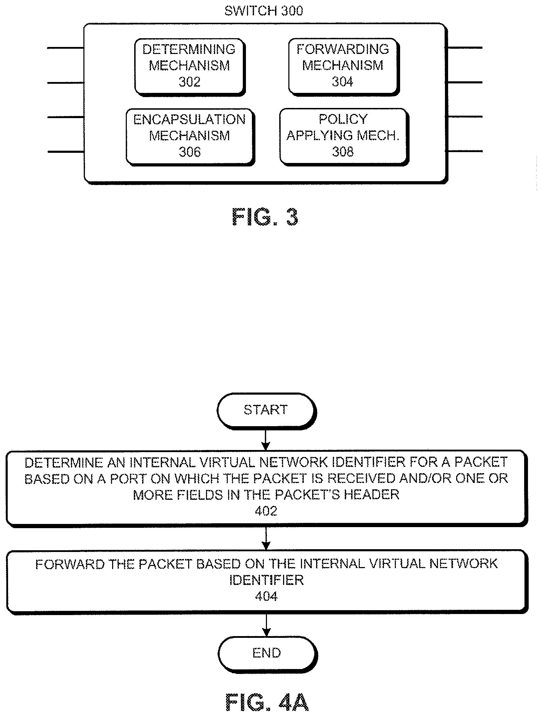

FIG. 3 illustrates a switch in accordance with some embodiments of the present invention.

Switch 300 can include a plurality of mechanisms which may communicate with one another via a communication channel, e.g., a bus. Switch 300 may be realized using one or more integrated circuits. In some embodiments, switch 300 is an RBridge (e.g., RBridge 102) which includes determining mechanism 302, forwarding mechanism 304, encapsulation mechanism 306, and policy applying mechanism 308. In some embodiments, these mechanisms may be part of an application-specific integrated circuit.

Determining mechanism 302 may be configured to determine an internal virtual network identifier and/or an internal policy identifier for a packet (e.g., Ethernet packet) based on the port on which the packet is received and/or one or more fields in the packet. Specifically, the fields in the packet's header that are used for determining the internal virtual network identifier and/or the internal policy identifier can include an S-VLAN-identifier, a C-VLAN-identifier, a VPN identifier, and/or one or more MAC addresses. The switch and/or port configuration can dictate which fields are used to determine the internal virtual network identifier and/or the internal policy identifier. For example, one port of a switch may be configured to map all packets to a particular internal virtual network identifier and/or a particular internal policy identifier. Another port of the switch may be configured to map a set of C-VLAN-identifiers to a corresponding set of internal virtual network identifiers and/or a corresponding set of internal policy identifiers, and assign a default internal virtual network identifier and/or a default internal policy identifier to a packet if the C-VLAN-identifier is not in the set of C-VLAN-identifiers.

Forwarding mechanism 304 may be configured to forward the packet based on the internal virtual network identifier. Specifically, forwarding mechanism 304 may include a table (e.g., an array in memory) which is indexed using the internal virtual network identifier. Each record in the table (e.g., an array element) can include information that indicates how to forward the packet. For example, the record may include a port identifier that identifies the outgoing port. The record may also include instructions and/or information for modifying one or more fields in the header (e.g., the record may indicate that VLAN translation is to be performed and specify the new VLAN identifier). Additionally, the record may include header fields that need to be added to the packet (e.g., a TRILL header and/or an S-tag).

Encapsulation mechanism 306 may be configured to encapsulate the packet in a TRILL packet. Specifically, encapsulation mechanism 306 may add a TRILL header to the packet to obtain a TRILL packet. In some embodiments, the packet header information can be used to determine the TRILL header that needs to be added to the packet. In other words, in these embodiments, the TRILL header and the internal virtual network identifier are determined concurrently. In some embodiments, the internal virtual network identifier can be used to determine the TRILL header that needs to be added to the packet (e.g., the record in the forwarding table may specify the TRILL header). Once the TRILL header has been added, the TRILL packet can be sent through the outgoing port.

In some embodiments, forwarding mechanism 304 or encapsulation mechanism 306 may be configured to add an S-tag (if one is not already present in the packet) to implement network virtualization. Specifically, if a packet received from a customer includes a C-tag, but not an S-tag, then the RBridge may add an S-tag to the packet to support network virtualization and/or partitioning within the TRILL network. The systems and techniques described in this disclosure can be used for implementing network virtualization and/or partitioning using either a VPN identifier embedded in the TRILL header or an S-tag.

In some embodiments, policy applying mechanism 308 can be configured to process the packet according to a policy associated with the internal policy identifier. Packets from different virtual networks can be mapped to the same internal policy identifier if the packets from these virtual networks are desired to be processed according to the same policy. A policy can generally include an arbitrary set of rules which specify how a packet is to be processed within the system. When a policy applying mechanism 308 processes a packet according to a given policy, the system can perform one or more actions, which can include, but are not limited to: dropping the packet, routing the packet over a particular link or path, and/or modifying information in the packet's header. The particular policy-based action that policy applying mechanism 308 performs for a packet can depend on information stored in the packet, and can override a forwarding decision that was made for the packet by forwarding mechanism 304.

Note that FIG. 3 is for illustration purposes only, and is not intended to limit the present invention to the forms disclosed. Specifically, in some embodiments, switch 300 may not be an RBridge, and/or may include fewer or more mechanisms than those shown in FIG. 3.

FIG. 4A presents a flowchart that illustrates a process for forwarding packets based on an internal virtual network identifier in accordance with some embodiments of the present invention.

The process can be performed by a switch, e.g., RBridge 102. Upon receiving a packet, the switch can determine an internal virtual network identifier for a packet based on a port on which the packet is received and/or one or more fields in the packet's header (operation 402). Specifically, the internal virtual network identifier can be determined based on a customer VLAN identifier, a service provider VLAN identifier, a source MAC address, and/or a VPN identifier. For example, the switch may determine the internal virtual network identifier by looking up the one or more fields in the packet's header in a context-addressable memory. If the lookup fails, the switch may assign a default internal virtual network identifier to the packet. A default internal virtual network identifier may be defined at one or more levels of granularity, e.g., on a virtual-network-wide or physical-network-wide basis, a system-wide basis, and/or on a per-port basis.

Next, the switch can forward the packet based on the internal virtual network identifier (operation 404). The switch can additionally encapsulate the packet in a TRILL packet by adding a TRILL header, and send the TRILL packet through the outgoing port which was determined based on the internal virtual network identifier.

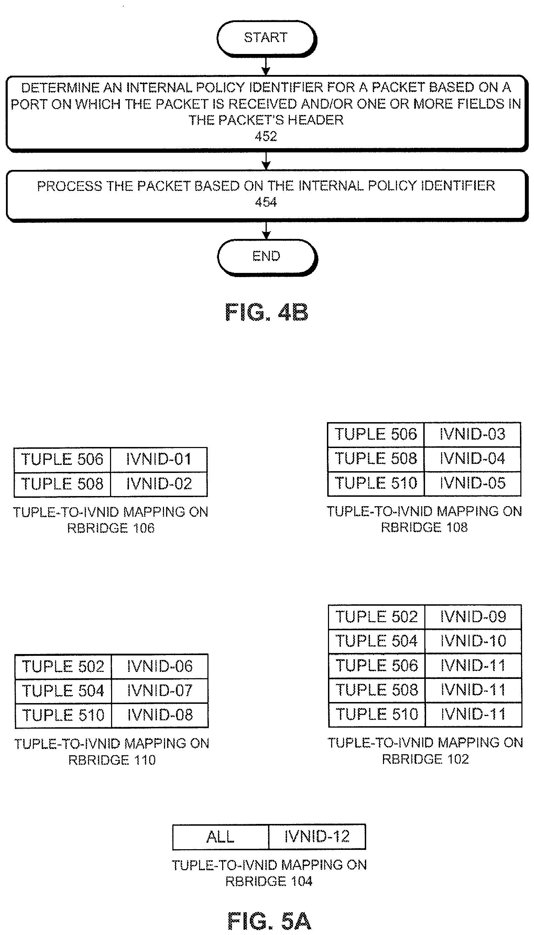

FIG. 4B presents a flowchart that illustrates a process for applying a policy to a packet based on an internal policy identifier in accordance with some embodiments of the present invention.

The process can be performed by a switch, e.g., RBridge 102. Upon receiving a packet, the switch can determine an internal policy identifier for a packet based on a port on which the packet is received and/or one or more fields in the packet's header (operation 452). Specifically, the internal policy identifier can be determined based on a customer VLAN identifier, a service provider VLAN identifier, a source MAC address, and/or a VPN identifier. For example, the switch may determine the internal policy identifier by looking up the one or more fields in the packet's header in a context-addressable memory. If the lookup fails, the switch may assign a default internal policy identifier to the packet. A default internal policy identifier may be defined at one or more levels of granularity, e.g., on a virtual-network-wide or physical-network-wide basis, a system-wide basis, and/or on a per-port basis.

Next, the switch can process the packet based on the internal policy identifier (operation 454). Processing the packet based on the internal policy identifier can involve performing one or more actions, which can include, but are not limited to: dropping the packet, routing the packet over a particular link or path, and/or modifying information in the packet's header. The particular policy-based action that is performed can depend on information stored in the packet, and can override a forwarding decision that was made for the packet based on an internal virtual network identifier.

FIG. 5A illustrates examples of mappings between packet header information and internal virtual network identifiers in accordance with some embodiments of the present invention.

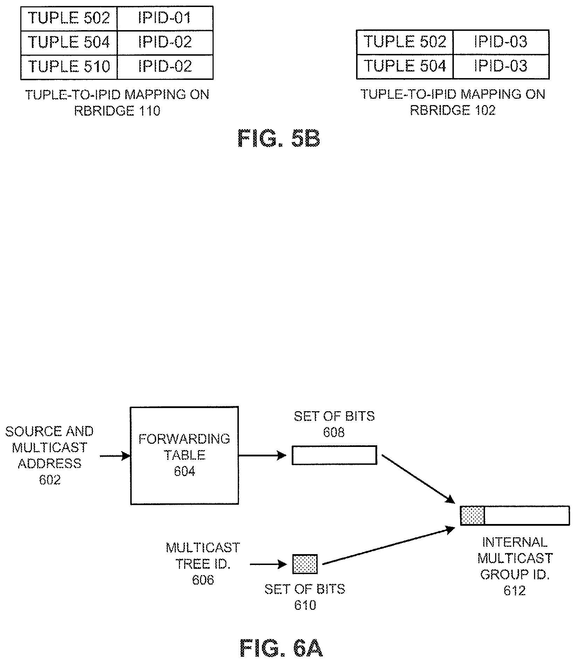

As mentioned above, the port on which a packet is received and/or one or more fields in the packet's header can be mapped to an internal virtual network identifier. The mappings shown in FIG. 5A map a (VLAN identifier, VPN identifier) tuple from a packet's header to an internal virtual network identifier. The mappings shown in FIG. 5 are for illustration purposes only and are not intended to limit the present invention to the forms disclosed.

The mappings illustrated in FIG. 5A may correspond to RBridges 102, 104, 106, 108, and 110 in FIG. 1. The mapping on RBridge 106 may map (VLAN identifier, VPN identifier) tuples 506 and 508 to internal virtual network identifiers IVNID-01 and IVNID-02, respectively. The mapping on RBridge 108 may map tuples 506, 508, and 510 to internal virtual network identifiers IVNID-03, IVNID-04, and IVNID-05, respectively. The mapping on RBridge 110 may map tuples 502, 504, and 510 to internal virtual network identifiers IVNID-06, IVNID-07, and IVNID-08, respectively.

The mapping on RBridge 102 may map tuples 502 and 504 to internal virtual network identifiers IVNID-09 and IVNID-10, respectively. If the traffic associated with tuples 506, 508, and 510 passes through RBridge 102, these tuples may be mapped to a common internal virtual network identifier, namely, IVNID-11. If all traffic passes through RBridge 104, the RBridge may map all tuples to a common internal virtual network identifier, namely, IVNID-12.

In some embodiments, the scope of internal virtual network identifiers does not extend beyond an RBridge. Hence, different RBridges may map the same tuple to different internal virtual network identifiers. For example, the tuple 506 is mapped to internal virtual network identifiers IVNID-01, IVNID-03, IVNID-11, and IVNID-12 on RBridges 106, 108, 102, and 104, respectively.

When RBridge 106 receives a packet on port P1 whose header information includes tuple 506, it can use the mapping shown in FIG. 5A to determine the associated internal virtual network identifier, namely, IVNID-01. Next, RBridge 106 can forward the packet based on IVNID-01. Specifically, RBridge 106 can perform a forwarding lookup using IVNID-01 as the key. The result of the lookup operation may indicate that a TRILL header is to be added to the packet to obtain a TRILL packet, and that the resulting TRILL packet is to be forwarded to RBridge 102. At RBridge 102, the TRILL packet may be forwarded to RBridge 108 based on the TRILL header.

Note that RBridge 102 may determine an internal virtual network identifier (e.g., IVNID-11) based on the header information. However, since the packet has a TRILL header, the internal virtual network identifier may be ignored by RBridge 102 for purposes of forwarding the packet (assuming that the packet is not destined for VLANs 112 or 114).

When the packet is received at RBridge 108, an internal virtual network identifier (e.g., IVNID-03) may be determined based on the header information. Next, the internal network identifier may be used to perform a forwarding lookup. The result of the lookup operation may indicate that the packet is to be forwarded on port P1 to VLAN 116. Accordingly, RBridge 108 may forward the packet on port P1 to VLAN 116.

FIG. 5B illustrates examples of mappings between packet header information and internal policy identifiers in accordance with some embodiments of the present invention.

As mentioned above, the port on which a packet is received and/or one or more fields in the packet's header can be mapped to an internal policy identifier. The mappings shown in FIG. 5B map a (VLAN identifier, VPN identifier) tuple from a packet's header to an internal policy identifier (IPID). In general, there is a one-to-one mapping between an internal policy identifier and a policy that is desired to be enforced. The mappings shown in FIG. 5B are for illustration purposes only and are not intended to limit the present invention to the forms disclosed.

The mappings illustrated in FIG. 5B may correspond to RBridges 102 and 110 in FIG. 1. The mapping on RBridge 110 may map (VLAN identifier, VPN identifier) tuples 502, 504, 510 to internal policy identifiers IPID-01, IPID-02, and IPID-02, respectively. The mapping on RBridge 102 may map tuples 502 and 504 to internal policy identifier IPID-03. Note that the same tuple may be treated differently (in terms of which policy is applied) by different RBridges. For example, RBridge 110 applies different polices to packets associated with tuples 502 and 504 (because, as shown in FIG. 5B, these tuples are mapped to different IPIDs), whereas RBridge 102 applies the same policy to packets associated with tuples 502 and 504. Further, an RBridge may apply the same policy to packets belonging to different virtual networks and/or customers. For example, tuples 504 and 510 may correspond to packets that belong to VLANs 114 and 120, respectively. As shown in FIG. 5B, RBridge 110 maps tuples 504 and 510 to the same IPID, i.e., RBridge 110 applies the same policy to packets from VLAN 114 (which belongs to customer C3) and VLAN 120 (which belongs to customer C1).

### Supporting Multiple Multicast Trees in TRILL Networks

When a multicast packet is received on an input port, the multicast packet header is processed by the switch to determine the set of output ports on which the multicast packet is to be forwarded. Oftentimes, the forwarding mechanism (e.g., an application-specific integrated circuit designed for performing forwarding look-ups) is the bottleneck in the data path. Consequently, increasing the processing speed and decreasing the size and complexity of the forwarding mechanism is usually very important.

One approach for supporting multiple multicast trees is to have multiple forwarding entries (e.g., one entry per multicast tree) in the forwarding table for a given source address and multicast group address. Unfortunately, this approach can substantially increase the size of the forwarding table or severely limit the number of multicast groups that can be supported by the forwarding table.

Some embodiments determine an internal multicast group identifier based on one or more fields in the multicast packet's header. The multicast group identifier is then used to determine a set of egress ports through which the multicast packet is to be forwarded.

FIG. 6A illustrates how an internal multicast group identifier can be determined in accordance with some embodiments of the present invention.

Internal multicast group identifier 612 is composed of two sets of bits. The first set of bits 608 can be determined by looking up forwarding table 604 using the source address and multicast address 602 of a multicast packet. In some embodiments, forwarding table 604 is implemented using a content-addressable memory. The second set of bits 610 can be determined based on a multicast tree identifier 606 in the multicast packet. If the multicast packet does not have a multicast tree identifier, the switch can select the second set of bits 610 on its own, e.g., by using a hash-based technique.

Note that the forwarding table docs not store an entry for each multicast tree supported by the switch. Instead, the forwarding table stores a single entry for a given source address and multicast address. The second set of bits is then used to select a particular tree from the multiple multicast trees that are associated with the given source address and multicast address. Since the forwarding table is not required to store an entry for each multicast tree, some embodiments of the present invention are capable of supporting a substantially greater number of multicast trees than other approaches that require the forwarding table to store an entry for each multicast tree.

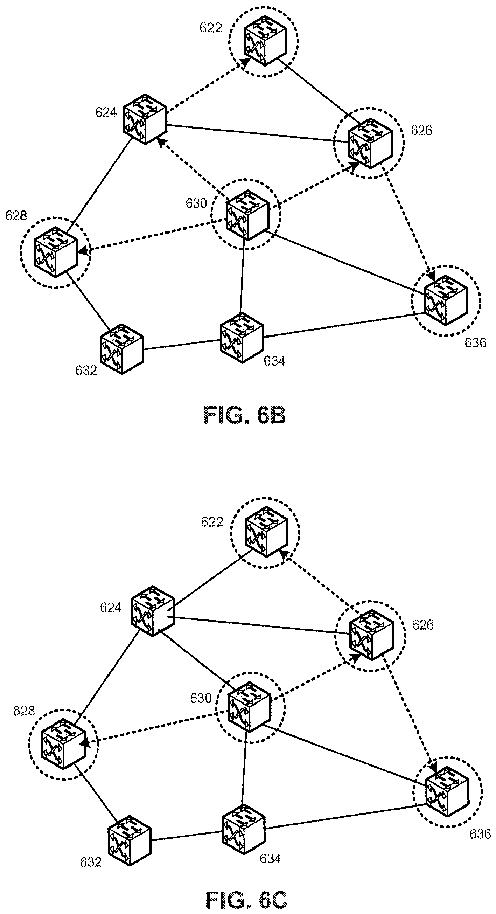

FIGs. 6B and 6C illustrate different multicast trees for the same source and multicast address in accordance with some embodiments of the present invention.

RBridges 622-636 can be in a TRILL network. A multicast group can include RBridges 622, 626, 628, 630, and 636 (the RBridges in the multicast group are shown using a dotted circle). FIGs. 6B and 6C illustrate two multicast trees using dotted lines. Note that both multicast trees are rooted at RBridge 630.

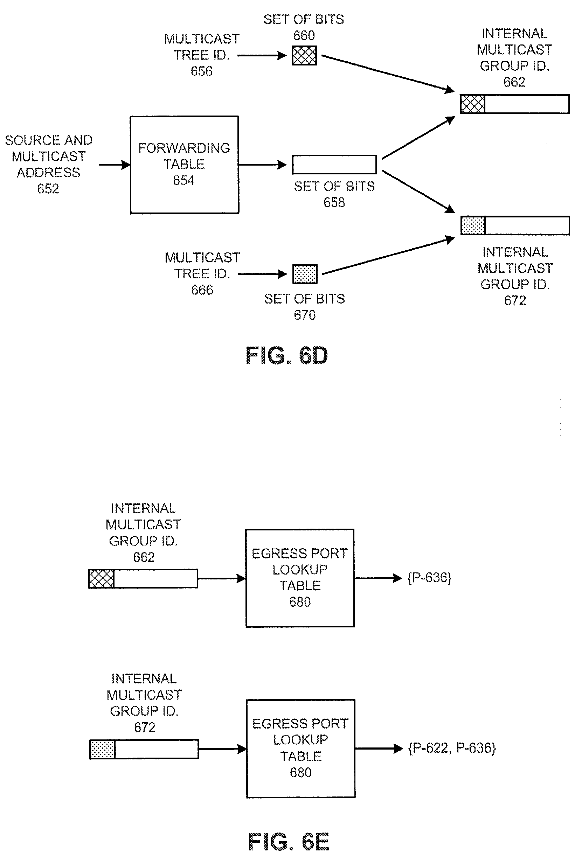

FIG. 6D illustrates how an internal multicast group identifier can be determined in accordance with some embodiments of the present invention.

When a multicast packet is received at RBridge 626, it may use source and multicast address 652 of the multicast packet to look up forwarding table 654 to obtain a first set of bits 658. Source and multicast address 652 can be Ethernet or IP addresses.

Next, RBridge 626 may use the multicast tree identifier in the multicast packet to determine a second set of bits. Note that the multicast tree identifier in the multicast packet identifies the multicast tree over which the multicast packet is to be forwarded. In some embodiments, the multicast tree identifier is an RBridge nickname. For example, RBridge 630 may be associated with multiple nicknames which may correspond to multiple multicast trees rooted at RBridge 630.

The multicast tree illustrated in FIG. 6B can be associated with multicast tree identifier 656, and RBridge 626 may use multicast tree identifier 656 to determine second set of bits 660. The multicast tree illustrated in FIG. 6C can be associated with multicast tree identifier 666, and RBridge 626 may use multicast tree identifier 666 to determine second set of bits 670.

RBridge 626 can then combine the first set of bits and the second set of bits to obtain the internal multicast group identifier. For example, if the multicast packet contains multicast tree identifier 656, RBridge 626 can combine first set of bits 658 with second set of bits 660 to obtain internal multicast group identifier 662. On the other hand, if the multicast packet contains multicast tree identifier 666, RBridge 626 can combine first set of bits 658 with second set of bits 670 to obtain internal multicast group identifier 672.

FIG. 6E illustrates how an internal multicast group identifier can be used to determine a set of egress ports in accordance with some embodiments of the present invention.

Egress port lookup table 680 can be used to determine a set of egress ports based on the internal multicast group identifier. For example, performing a table lookup at RBridge 626 using internal multicast group identifier 662 may output set of egress ports {P-636}. Port P-636 represents a port on RBridge 626 that is coupled to RBridge 636. Similarly, performing a table lookup at RBridge 626 using internal multicast group identifier 672 may output set of egress ports {P-622, P-636}. Port P-622 represents a port on RBridge 626 that is coupled to RBridge 622. Once the set of egress ports has been determined, the system can forward copies of the multicast packet through the egress ports. Egress port lookup table 680 may be implemented as an array that is indexed using the internal multicast group identifier. Each entry in the array may store the set of egress ports.

### Network Layer Multicasting in TRILL Networks

Some embodiments provide systems and techniques for performing network layer (e.g., IP layer) multicasting. Computer networking is typically accomplished using a layered software architecture, which is often referred to as a networking stack. Each layer is usually associated with a set of protocols which define the rules and conventions for processing packets in that layer. Each lower layer performs a service for the layer immediately above it to help with processing packets. At the source node, each layer typically adds a header as the payload moves from higher layers to lower layers through the source node's networking stack. The destination node typically performs the reverse process by processing and removing headers of each layer as the payload moves from the lowest layer to the highest layer at the destination node.

The multicast group membership at the network layer (e.g., the IP layer) can span multiple virtual networks, e.g., VPNs and/or VLANs. For example, in FIG. 1, a network layer multicast group may include end-hosts that are part of VLANs 116, 118, and 120 at sites S2, S3, and S4, respectively. In some embodiments, an RBridge can perform network layer multicasting, i.e., the RBridge can forward packets based on a network-layer multicast-address in addition to forwarding packets based on the TRILL header, VPN identifier, MAC addresses, and/or VLAN tags.

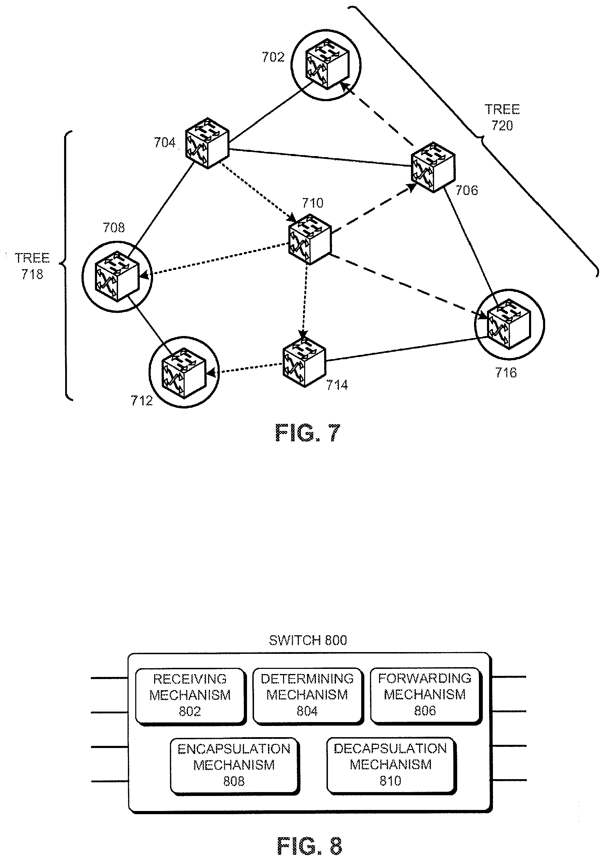

FIG. 7 illustrates how an RBridge can perform network layer multicasting in a TRILL network in accordance with some embodiments of the present invention.

RBridges 702-716 can be in a TRILL network which includes multiple virtual networks, e.g., VPNs and/or VLANs. Each virtual network may support multiple TRILL multicast trees. For example, TRILL multicast tree 718, which is illustrated using dotted lines, may belong to VLAN V1, and TRILL multicast tree 720, which is illustrated using dashed lines, may belong to VLAN V2.

A network layer (e.g., IP layer) multicast group can include end-hosts that are spread across multiple virtual networks, e.g., VPNs and/or VLANs. For example, a multicast group may include end-hosts that are in VPNs and/or VLANs coupled to RBridges 702, 708, 712, and 716 (these RBridges have been highlighted by drawing a circle around them). When a multicast packet for this multicast group is received at an RBridge, the RBridge may forward the multicast packet over a TRILL multicast tree on a particular VLAN. For example, when the multicast packet is received at RBridge 704, it may forward the packet over TRILL multicast tree 718 on VLAN V1.

When the multicast packet is received at RBridge 710, it may forward the packet based on the multicast packet's network-layer multicast-address. Specifically, RBridge 710 may determine that the multicast packet needs to be forwarded on both VLAN V1 and VLAN V2. RBridge 710 may forward the multicast packet on any one of the multiple multicast trees that are supported on VLAN V2. However, to ensure correct multicast forwarding, RBridge 710 may need to forward the multicast packet on VLAN V1 along the same multicast tree on which the multicast packet was received. Specifically, if RBridge 710 forwards the multicast packet on a multicast tree on VLAN V1 that is different from the one it was received on, it can create a forwarding loop and/or the multicast packet may not reach all of the end-hosts in the multicast group. Note that these problems do not arise if the network docs not support multiple multicast trees.

Note that an RBridge may or may not be configured to perform network layer multicasting. For example, in the above example, RBridge 704 is not configured to perform network layer multicasting, whereas RBridge 710 is configured to perform network layer multicasting.

In some embodiments, the multicast packet can be a TRILL multicast packet, and can include a multicast tree identifier associated with the multicast tree over which the multicast packet is to be forwarded. The header of a TRILL multicast packet can include a multicast field (e.g., multicast field 250 in FIG. 2) which indicates that the TRILL packet is a multicast packet. The egress RBridge nickname (e.g., egress RBridge nickname 256 in FIG. 2) can correspond to the root of the multicast tree over which the multicast packet is to be forwarded.

FIG. 8 illustrates a switch in accordance with some embodiments of the present invention.

Switch 800 can include a plurality of mechanisms which may communicate with one another via a communication channel, e.g., a bus. Switch 800 may be realized using one or more integrated circuits.

In some embodiments, switch 800 is an RBridge (e.g., RBridge 102) which includes receiving mechanism 802, determining mechanism 804, forwarding mechanism 806, encapsulation mechanism 808, and decapsulation mechanism 810. In some embodiments, these mechanisms may be part of an application-specific integrated circuit.

Receiving mechanism 802 may be configured to receive a multicast packet (e.g., an Ethernet or TRILL multicast packet). Determining mechanism 804 may be configured to determine an internal multicast group identifier based on a source address, a multicast address, and a multicast tree identifier field associated with the multicast packet.

Forwarding mechanism 806 may be configured to forward the packet based on the internal multicast group identifier. Specifically, forwarding mechanism 806 may include a table (e.g., an array in memory) which is indexed using the internal multicast group identifier. Each record in the table (e.g., an array element) can include information that indicates how to forward the packet. For example, the record may include a set of egress port identifiers that identifies the egress ports. The record may also include instructions and/or information for modifying one or more fields in the header (e.g., the record may indicate that VLAN translation is to be performed and specify the new VLAN identifier). Additionally, the record may include header fields that need to be added to the packet (e.g., a TRILL header). Multiple copies of a multicast packet may be sent on an egress port of switch 800 if the multicast packet is to be sent to multiple VLANs that are coupled to the egress port.

Encapsulation mechanism 808 may be configured to encapsulate a copy of the multicast packet in a TRILL multicast packet. Specifically, encapsulation mechanism 808 may add a TRILL header to a copy of the multicast packet to obtain a TRILL multicast packet. In some embodiments, the TRILL header and the internal multicast group identifier may be determined concurrently. Once the TRILL header has been added, the TRILL multicast packet can be sent through the outgoing port.

Decapsulation mechanism 810 may be configured to decapsulate a TRILL multicast packet (e.g., by removing the TRILL header) to obtain the multicast packet that was encapsulated in the TRILL multicast packet. The multicast packet can then be forwarded to the customer's network (e.g., a customer VLAN).

In some embodiments, switch 800 (e.g., RBridge 710 in FIG. 7) may be configured to perform network layer multicasting. In these embodiments, receiving mechanism 802 may be configured to receive a multicast packet that includes a network-layer multicast-address. Specifically, receiving mechanism 802 may receive the multicast packet on a first multicast tree (e.g., TRILL multicast tree 718 in FIG. 7) associated with a first virtual network (e.g., VLAN VI). The multicast packet may include a first multicast tree identifier associated with the first multicast tree. The first multicast tree identifier can be the nickname of the RBridge at the root of the first multicast tree.

Determining mechanism 804 may be configured to determine, based on the network-layer multicast-address, one or more multicast trees associated with one or more virtual networks over which the packet is to be forwarded. For example, determining mechanism 804 may be configured to determine, based on the network-layer multicast-address, a second multicast tree (e.g., TRILL multicast tree 720 in FIG. 7) associated with a second virtual network (e.g., VLAN V2) over which the multicast packet is to be forwarded.

Forwarding mechanism 806 may be configured to forward the multicast packet on one or more multicast trees. For example, forwarding mechanism 806 may be configured to forward the multicast packet on the first multicast tree associated with the first virtual network, and forward a copy of the multicast packet on the second multicast tree associated with the second virtual network. The copy of the multicast packet may include a second multicast tree identifier associated with the second multicast tree. The second multicast tree identifier can be the nickname of the RBridge at the root of the second multicast tree.

In some embodiments, determining mechanism 804 may be configured to determine an internal multicast group identifier based on the network-layer multicast-address and a network-layer source-address of the multicast packet, and forwarding mechanism 806 may be configured to forward the multicast packet based on the internal multicast group identifier.

Note that FIG. 8 is for illustration purposes only, and is not intended to limit the present invention to the forms disclosed. Specifically, in some embodiments, switch 800 may not be an RBridge, and/or may include fewer or more mechanisms than those shown in FIG. 8.

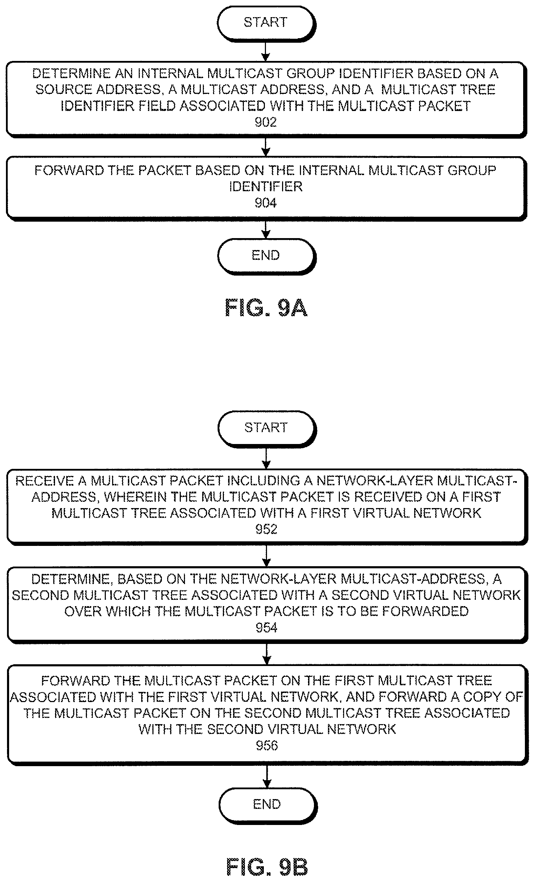

FIG. 9A presents a flowchart that illustrates a process for forwarding packets based on an internal multicast group identifier in accordance with some embodiments of the present invention.

The process can be performed by a switch, e.g., RBridge 102. Upon receiving a multicast packet (e.g., an Ethernet or TRILL multicast packet), the switch can determine an internal multicast group identifier based on a source address (e.g., a source MAC or IP address), a multicast address (e.g., a multicast MAC or IP address), and a multicast tree identifier field associated with the multicast packet (operation 902).

In some embodiments, the system can determine the internal multicast group identifier by combining two sets of bits: one set of bits determined based on the source address and the multicast address, and a second set of bits determined based on the multicast tree identifier. Specifically, in some embodiments, combining the two sets of bits involves concatenating the two sets of bits to create the internal multicast group identifier.

For example, the source IP address and the multicast IP address can be used to look up the first set of bits in a context addressable memory. If the multicast packet includes a multicast tree identifier (e.g., RBridge nickname), then the multicast tree identifier can be used to determine the second set of bits. If the multicast packet does not include a multicast tree identifier, then the system can determine the second set of bits by hashing one or more fields in the multicast packet (or by any other means). Next, the first set of bits can be concatenated with the second set of bits to obtain the internal multicast group identifier.

Next, the switch can forward the multicast packet based on the internal multicast group identifier (operation 904). Specifically, the system can determine a set of egress ports based on the internal multicast group identifier. Next, the system can send at least one copy of the multicast packet through each port in the set of egress ports. The switch can additionally encapsulate the multicast packet in a TRILL multicast packet by adding a TRILL header, and send copies of the TRILL multicast packet through the set of egress ports which was determined based on the internal multicast group identifier.

FIG. 9B presents a flowchart that illustrates a process for performing network layer multicasting in a TRILL network in accordance with some embodiments of the present invention.

The process can be performed by a switch, e.g., RBridge 710 in FIG. 7. The switch can receive a multicast packet (e.g., an Ethernet or TRILL multicast packet) that includes a network-layer multicast-address, wherein the multicast packet is received on a first multicast tree associated with a first virtual network (operation 952). For example, RBridge 710 may receive a multicast packet from RBridge 704 over TRILL multicast tree 718 on VLAN V1.

Next, the switch can determine, based on the network-layer multicast-address, a second multicast tree associated with a second virtual network over which the multicast packet is to be forwarded (operation 954). For example, RBridge 710 may determine TRILL multicast tree 720 on VLAN V2 over which the multicast packet is to be forwarded. The second multicast tree can be determined randomly or it can be determined based on link utilization (e.g., by determining the least congested multicast tree).

The switch can then forward the multicast packet on the first multicast tree associated with the first virtual network, and forward a copy of the multicast packet on the second multicast tree associated with the second virtual network (operation 956). For example, RBridge 710 may forward the multicast packet to RBridges 708 and 714 over TRILL multicast tree 718, and forward a copy of the multicast packet to RBridges 706 and 716 over TRILL multicast tree 720.

### Per-Virtual-Network Flooding

If a forwarding lookup operation fails, a switch may flood the packet to ensure that the packet reaches its intended destination. Unfortunately, flooding can consume a large amount of network resources. Therefore, it is generally desirable to limit the extent of flooding if possible.

In an IVNID based approach, packets from multiple virtual networks (e.g., VPNs or VLANs) may be mapped to the same IVNID value. For example, in FIG. 5A, (VLAN identifier, VPN identifier) tuples 506, 508, and 510 are mapped to the same IVNID value on RBridge 102. In one approach, if a forwarding lookup operation for a packet fails, the switch may flood the packet to at least those virtual networks that map to the IVNID for the packet. For example, if a forwarding lookup operation on Rbridge 102 fails for a packet associated with IVNID-11, Rbridge 102 may flood the packet at least on all ports that are associated with tuples 506, 508, and/or 510.

Flooding a packet on more virtual networks than necessary can waste networking resources. Therefore, in some embodiments of the present invention, flooding is performed on a per-virtual-network basis. Specifically, in some embodiments, filtering at the ports is performed based on the VPN identifier, and if the packet does not include a VPN identifier field, a VPN identifier can be determine based on other fields in the packet (e.g., the VPN identifier can be determined based on the S-VLAN identifier). For example, RBridge 102 can determine a set of egress ports based on an IVNID. Next, RBridge 102 can provide a copy of the packet to the set of egress ports. Each egress port can then flood the packet only if the virtual network identifier in the packet (e.g, a VPN identifier in the TRILL header or a VPN identifier that is determined based on other fields in the packet) is associated with the egress port. In other words, once the packet has been provided to the set of egress ports based on the IVNID, the egress ports can then filter packets based on a virtual network identifier field in the packets. For example, as shown in FIG. 5A, all packets are mapped to IVNID-12 on RBridge 104. In this case, if the forwarding lookup fails, the packet can be provided to all egress ports on RBridge 104. Each egress port can then flood the packet depending on whether or not the egress port is associated with the virtual network identifier in the packet.

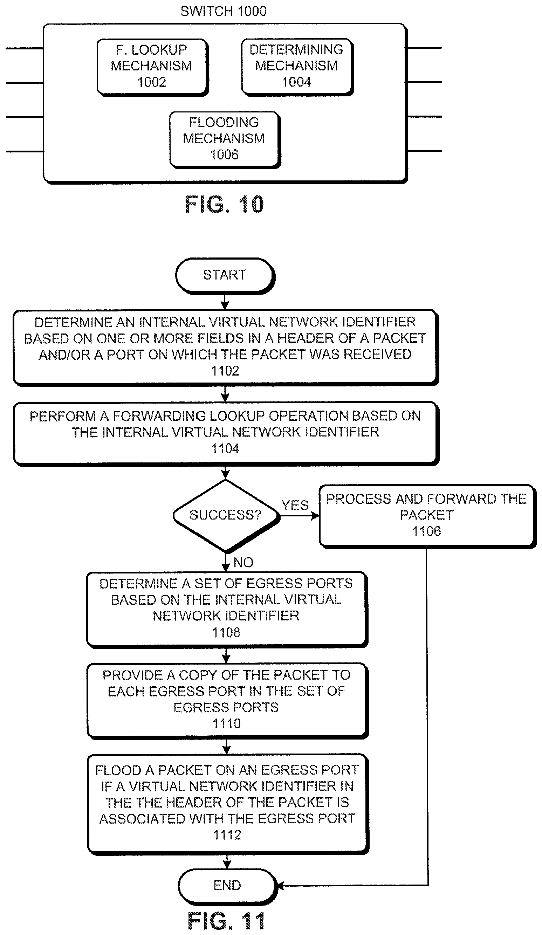

FIG. 10 illustrates a switch in accordance with some embodiments of the present invention.

Switch 1000 can include a plurality of mechanisms which may communicate with one another via a communication channel, e.g., a bus. Switch 1000 may be realized using one or more integrated circuits. In some embodiments, switch 1000 is an RBridge (e.g., RBridge 102) which includes forwarding lookup mechanism 1002, determining mechanism 1004, and flooding mechanism 1006. In some embodiments, these mechanisms may be part of an application-specific integrated circuit.

Forwarding lookup mechanism 1002 may be configured to perform a forwarding lookup operation based on one or more fields in a packet's header. The one or more fields in the packet's header can include, but are not limited to, a customer VLAN identifier, a service provider VLAN identifier, a source MAC address, a destination MAC address, an ingress RBridge nickname, and an egress RBridge nickname. In some embodiments, forwarding lookup mechanism 1002 may be configured to perform a look up using a content-addressable memory.

Switch 1000 may determine an internal virtual network identifier for a packet (e.g., Ethernet packet) based on the port on which the packet is received and/or one or more fields in the packet's header. The switch and/or port configuration can dictate which fields are used to determine the internal virtual network identifier. For example, one port of a switch may be configured to map all packets to a particular internal virtual network identifier. Another port of the switch may be configured to map a set of C-VLAN-identifiers to a corresponding set of internal virtual network identifiers, and assign a default internal virtual network identifier to a packet if the C-VLAN-identifier is not in the set of C-VLAN-identifiers.

If the forwarding lookup operation is successful, switch 1000 may forward the packet based on the result of the forwarding lookup operation and the internal virtual network identifier. The switch may include a table (e.g., an array in memory) which is indexed using the internal virtual network identifier. Each record in the table (e.g., an array element) can include information that is used for forwarding the packet. For example, the record may include instructions and/or information for modifying one or more fields in the header (e.g., the record may indicate that VLAN translation is to be performed and specify the new VLAN identifier). Additionally, the record may indicate the header fields that need to be added to the packet (e.g., a TRILL header). Once the packet is provided to the egress ports, the system can determine the encapsulation for the packet. Specifically, at the egress port the system can determine whether to send the packet through the egress port with a C-tag, an S-tag, a TRILL header, and/or a TRILL option field that contains a VPN identifier. The system can also perform translation operations, such as translating a C-tag, an S-tag, and/or a VPN identifier.

However, if the forwarding lookup operation fails, determining mechanism 1004 may determine a set of egress ports based on a virtual network identifier in the packet's header. For example, the system can determine the set of egress ports based on a VLAN identifier in a VLAN tag or a VPN identifier in a TRILL option field, or a combination thereof.

Flooding mechanism 1006 may be configured to flood the packet over the set of egress ports. Since flooding is performed on a set of egress ports that were determined based on a virtual network identifier in the packet's header, the flooding is more efficient than approaches that flood the packet over all ports regardless of whether or not a particular node in the network belongs to the virtual network associated with the packet.

In some embodiments, the packet is flooded by forwarding the packet over a multicast tree which may be determined based on the virtual network identifier in the packet's header. Specifically, switch 1000 can create a TRILL multicast packet whose header includes a multicast tree identifier. Next, switch 1000 can forward the TRILL multicast packet over the set of egress ports associated with the multicast tree identifier. In some embodiments, the multicast tree identifier is a nickname of an RBridge that is the root of the multicast tree.

Note that FIG. 10 is for illustration purposes only, and is not intended to limit the present invention to the forms disclosed. In some embodiments, switch 1000 may not be an RBridge, and/or may include fewer or more mechanisms than those shown in FIG. 10.

In some embodiments, determining mechanism 1004 may determine a set of egress ports based on an IVNID associated with the packet, and/or one or more fields in the packet's header. Next, flooding mechanism 1006 can provide a copy of the packet to each egress port in the set of egress ports. Flooding mechanism 1006 can then flood a copy of the packet over an egress port only if a virtual network identifier in the packet is associated with the egress port. For example, if an egress port is not coupled to a customer network that is associated with the virtual network identifier, then the egress port may filter out the packet.

FIG. 11 presents a flowchart that illustrates a process for flooding packets on a per-virtual-network basis in accordance with some embodiments of the present invention.

The process can be performed by a switch, e.g., RBridge 102. Upon receiving a packet, the switch can determine an internal virtual network identifier based on one or more fields in a packet and/or a port on which the packet was received (operation 1102). Next, the system can perform a forwarding lookup operation based on the internal virtual network identifier (operation 1104).

If the forwarding lookup operation succeeds, the switch can process and forward the packet accordingly (operation 1106). However, if the forwarding lookup operation fails, the switch can determine a set of egress ports based on the internal virtual network identifier (operation 1108). Next, the switch can provide a copy of the packet to each egress port in the set of egress ports (operation 1110). The system can then flood a packet on an egress port if a virtual network identifier in the header of the packet is associated with the egress port (operation 1112). For example, the system can flood a packet on an egress port if a VPN identifier in the packet indicates that the egress port is coupled to a virtual network associated with the VPN identifier.

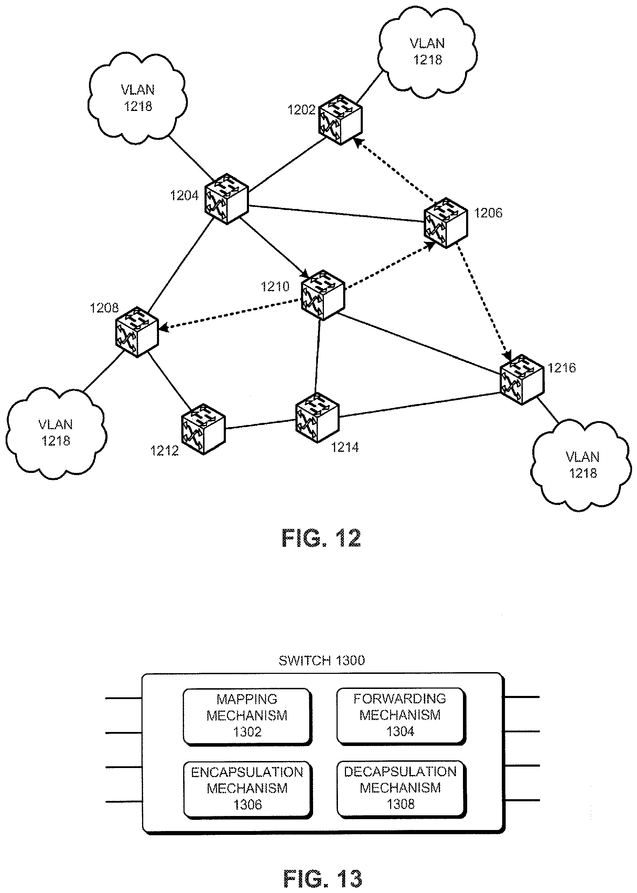

FIG. 12 illustrates how flooding can be performed on a per-virtual-network basis in accordance with some embodiments of the present invention.

RBridges 1202-1216 can be in a TRILL network. RBridges 1202, 1208, and 1216 can be coupled to customer networks that are part of the same virtual network. For example, RBridges 1202, 1204, 1208, and 1216 may be coupled to VLAN 1218 at different customer sites. Suppose RBridge 1210 receives a packet from RBridge 1204 that includes a VLAN identifier associated with VLAN 1218. If a forwarding lookup operation for the packet fails at RBridge 1210, RBridge 1210 can encapsulate the packet in a TRILL multicast packet, and forward the TRILL multicast packet over the multicast tree, as shown in FIG. 12 using dotted lines.

Note that the TRILL multicast tree is rooted at RBridge 1210. In some embodiments, the TRILL multicast packet header can include a field (e.g., multicast field 250 in FIG. 2) which indicates that the packet is a multicast packet. Further, the TRILL multicast packet header can include a multicast tree identifier as the egress RBridge nickname which identifies the multicast tree over which the TRILL multicast packet is to be forwarded. For example, the egress RBridge 256 field in FIG. 2 can be used as the multicast tree identifier by setting it to be the nickname of an RBridge which is the root of the multicast tree.

### Preserving Quality of Service (QoS) Across TRILL Networks

QoS refers to the ability of a switch and/or a network to meet the service requirements (e.g loss, delay, etc.) of its users (applications, data flows). This is typically done by providing different processing priorities and/or resources based on information contained in the packet. For example, QoS objectives can be met by providing different priority levels to packets from different applications, users, or data flows. QoS is widely used to support applications which require certain performance guarantees from the network to operate as intended. For example, real-time streaming multimedia applications often rely on QoS features for proper operation.

In packet-switched networks, QoS information is often carried in one or more bits in the packet header. At each switch or node in the network, the QoS information in a packet can be used to determine how to process the packet. For example, the QoS bits may indicate a priority level of the packet and/or the drop eligibility of the packet. The switch may have different packet queues for different priority levels, and the switch may allocate more resources (e.g., more memory and processing time) for processing high-priority packets than for processing low-priority packets and may discard packets with a higher drop eligibility before packets with a lower drop eligibility during times of congestion.

Implementing end-to-end QoS policies can help a network administrator to utilize the network bandwidth more effectively. For example, a network administrator can use a network's QoS features to ensure that packets from delay-sensitive applications, e.g., real-time multimedia applications, are processed and/or forwarded in the network with a high priority.

To be effective, QoS typically needs to be implemented in an end-to-end fashion. For example, in FIG. 1, suppose customer C3 wishes to support a video conferencing application between sites S1 and S5. To this end, customer C3 may want video conferencing packets to be processed in the network with a higher priority than other packets. Customer C3 can configure its networks at sites S1 and S5 to ensure that video conferencing packets are processed accordingly. However, customer C3 may not be able to directly control how switches in TRILL network 100 will process the video conferencing packets. If TRILL network 100 does not process video conferencing packets with high priority, the video conferencing packets may experience an unacceptable amount of delay while traversing TRILL network 100, thereby defeating the whole purpose of using QoS for the video conferencing application.

One approach for implementing end-to-end QoS is to ensure that the QoS settings in the service provider's network (e.g., a TRILL network) are the same as the QoS settings in the client's network. Unfortunately, this approach is unlikely to work because the QoS settings of different clients may conflict with one another.

Some embodiments of the present invention provide systems and techniques for implementing end-to-end QoS even when different clients have different QoS requirements. Specifically, an ingress switch (e.g., an RBridge) can receive a packet from a customer network. For example, in FIG. 1, RBridge 106 can receive a packet from customer C1's network at site S2. Next, the ingress switch can map the QoS bits in the customer packet to another set of QoS bits for use in a TRILL packet which encapsulates the customer packet. The ingress switch can generate the TRILL packet that includes the second set of QoS bits. The service provider can define a set of standardized QoS levels within the network, and map the QoS bits in the customer's packet to an appropriate QoS level within the network. Note that the set of QoS bits in the TRILL packet can be different from the QoS bits in the customer packet. Further note that the QoS bits in the customer packet are preserved because these bits are not modified.

Additionally the service provider may wish to police the customer traffic entering the service provider network and mark packets "out of profile" with a higher drop eligibility so that they may be discarded before other packets that have a lower drop eligibility during times of network congestion.

Once the QoS bits have been mapped, the ingress switch can send the TRILL packet to the egress switch(es). At each hop, the TRILL packet can be processed in accordance with the QoS bits in the TRILL packet. Finally, once the TRILL packet reaches the egress switch, the egress switch can strip away the TRILL header and send the packet which contains the original QoS bits to the customer's network. For example, in FIG. 1, ingress RBridge 106 can send a TRILL packet to egress RBridge 110 via RBridge 104. At RBridge 104, the TRILL packet can be processed in accordance with the QoS bits in the TRILL packet. Finally, egress RBridge 110 can strip away the TRILL header from the TRILL packet and send the packet which contains the original QoS bits to customer C1's network at site S4.

FIG. 13 illustrates a switch in accordance with some embodiments of the present invention.

Switch 1300 can include a plurality of mechanisms which may communicate with one another via a communication channel, e.g., a bus. Switch 1300 may be realized using one or more integrated circuits. In some embodiments, switch 1300 includes mapping mechanism 1302, forwarding mechanism 1304, encapsulation mechanism 1306, and decapsulation mechanism 1308. In some embodiments, these mechanisms may be implemented as functional blocks in an application-specific integrated circuit. FIG. 13 is for illustration purposes only, and is not intended to limit the present invention to the forms disclosed. Specifically, in some embodiments, switch 1300 may not be an RBridge, and/or may include fewer or more mechanisms than those shown in FIG. 13.

Forwarding mechanism 1304 may be configured to forward a packet based on information contained in the packet header. Specifically, forwarding mechanism 1304 may determine the outgoing port by performing a look-up in a content addressable memory using data fields (e.g., MAC addresses, VLAN tags, RBridge nicknames, etc.) in the packet header.

At the ingress switch, encapsulation mechanism 1306 may be configured to encapsulate an Ethernet packet (which may include one or more VLAN tags) in a TRILL packet by adding a TRILL header. The Ethernet packet header can be used to determine the TRILL header that needs to be added to the Ethernet packet and the port over which the TRILL packet is to be sent. Once the TRILL header has been added, the TRILL packet can be sent through the outgoing port. At the egress switch, decapsulation mechanism 1308 may be configured to strip away the TRILL header.

Mapping mechanism 1302 may be configured to map a first set of QoS bits in the Ethernet packet received from a customer to a second set of QoS bits for use in the TRILL header. The TRILL header may be created before or after mapping mechanism 1302 generates the second set of bits. The service provider's network (e.g., TRILL network 100) may use a set of normalized QoS levels. Mapping mechanism 1302 may select a normalized QoS level which is consistent with the QoS information contained in the original Ethernet packet.

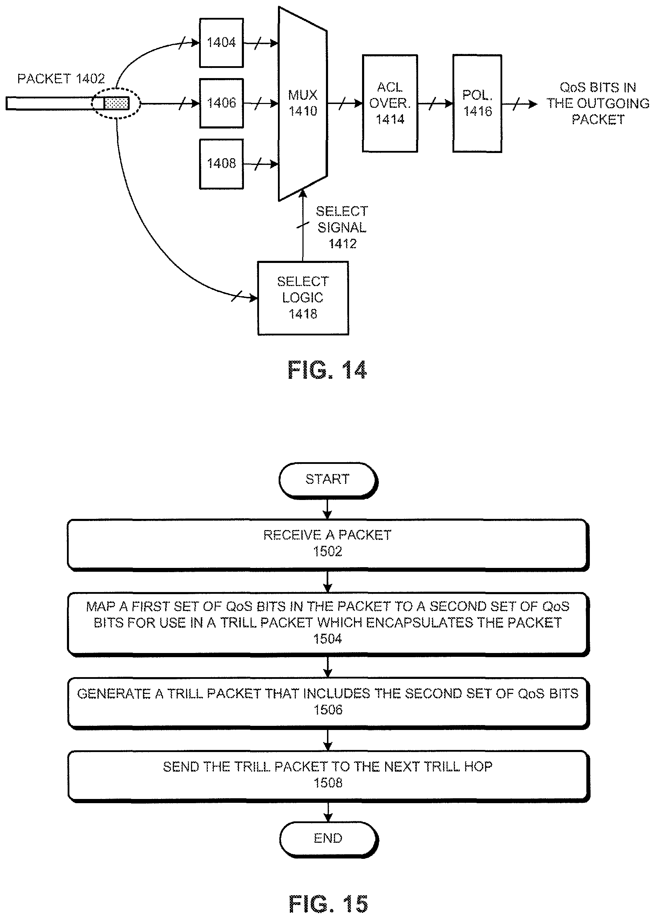

FIG. 14 illustrates an exemplary mapping mechanism in accordance with some embodiments of the present invention.

The exemplary mapping mechanism illustrated in FIG. 14 can include one or more hardware and/or software modules. Specifically, the mapping mechanism can include one or more QoS mapping tables, such as tables 1404 and 1406, and a set of registers, such as registers 1408. A look-up can be performed on tables 1404 and 1406 based on different sets of QoS bits from incoming packet 1402 (which can be an Ethernet packet). For example, the look-up on table 1404 may be performed using QoS bits from the outermost VLAN tag in packet 1402, whereas the look-up on table 1406 may be performed using Internet Protocol (IP) Differentiated Services Code Point (DSCP) bits from a header of an IP packet that is encapsulated within packet 1402. Registers 1408 may provide a default set of QoS bits which may be used in lieu of the outputs from tables 1404 or 1406.

The result of the lookup can be a set of QoS bits which correspond to a normalized set of QoS levels that are used within the service provider's network. In some embodiments, the result of the look-up can be a three-bit priority level, a six-bit IP DSCP value, a two-bit drop precedence value, and/or a one-bit drop eligibility indicator. The drop precedence value and drop eligibility indicator can be used to modify the probability that the packet will be dropped during congestion. Specifically, the drop precedence value indicates that the packet was over the committed rate allowed during policing, and hence, the packet may be dropped during congestion. In some embodiments, the CFI bit in a VLAN tag is used to carry the drop eligibility indicator which indicates that the packet was over its quota, and therefore, can be dropped during congestion.

The lookup results from the one or more tables and/or registers can be provided as input to multiplexer 1410. Select signal 1412 can be provided as a control input to multiplexer 1410 to control the set of inputs that multiplexer 1410 couples with its outputs. Select signal 1412 may be generated by select logic 1418, which may receive header information from packet 1402 as one of the inputs.

In some embodiments, select logic 1418 can determine if packet 1402 encapsulates an IP packet and if the DSCP bits should be used for determining QoS. If so, select logic 1418 can generate select signal 1412 to cause multiplexer 1410 to output the lookup results from table 1406. If packet 1402 does not encapsulate an IP packet, or if the DSCP bits are not trustable, then select logic 1418 can determine whether packet 1402 includes one or more VLAN tags (e.g., a C-tag, an S-tag, or both). If so, select logic 1418 can generate select signal 1412 to cause multiplexer 1410 to output the lookup results from table 1404. If packet 1402 does not encapsulate an IP packet, or if the DSCP bits are not trustable, and if packet 1402 also does not include a VLAN tag, select logic 1418 can generate select signal 1412 to cause multiplexer 1410 to output the default QoS bit values stored in registers 1408.

The output of multiplexer 1410 can be provided as input to access control list (ACL) override 1414. ACL override 1414 can be used to override the QoS bits that were determined by the mapping tables based on any ACLs that are configured on the switch. For example, ACL override 1414 can enable a user to force certain packets (e.g., packets of a particular flow) to have a particular QoS level regardless of the values of the QoS bits in the packet header. In some embodiments, ACL override 1414 can be implemented using a tertiary content addressable memory. Note that ACL override 1414 may receive header information of packet 1402 as input (not shown in FIG. 14) for determining whether or not to override the QoS bits.

The output from ACL override 1414 can then be provided to policer 1416. Policer 1416 can help to enforce the QoS policies defined in the network. Specifically, policer 1416 can adjust the QoS bits of packets in a packet flow if the flow is violating its service profile. For example, if the packet is part of a packet flow that is using more bandwidth than what was allocated to the flow, policer 1416 can adjust the drop precedence of the packet to increase the probability that the packet will be dropped during congestion. The output of policer 1416 can then be used in the outgoing packet. For example, if the outgoing packet is a TRILL packet which encapsulates packet 1402, then the QoS bits in the outer VLAN tag (e.g., outer VLAN tag 204 in FIG. 2) can be set using the output of policer 1416.

Note that the original QoS bits may be preserved in one of the inner VLAN tags (e.g., the outermost VLAN tag in VLAN tags 212 in FIG. 2) or in the IP header. In such cases, at the egress switch the outer VLAN tag is stripped off, and the packet is forwarded to the customer's network with the original QoS bits which were preserved in one of the inner VLAN tags and/or IP header. In some embodiments, the system may modify the original QoS bits. In these embodiments, the system may modify the original QoS bits at the egress switch before forwarding the packet to the customer's network.

FIG. 15 presents a flowchart that illustrates a process for processing packets in accordance with some embodiments of the present invention.

The process can begin with a system receiving a packet (operation 1502). Next, the system can map a first set of QoS bits in the packet to a second set of QoS bits for use in a TRILL packet which encapsulates the packet (operation 1504). Note that these two sets of QoS bits can be different from each another (i.e., these two sets may not be copies of each other). The first set of QoS bits can be priority bits in the outermost tag in the set of inner VLAN tags, e.g., inner VLAN tags 212 in FIG. 2. Alternatively, the first set of QoS bits can be IP DSCP bits in a header of an IP packet that is encapsulated within the packet. The second set of QoS bits can be the priority bits in the outer VLAN tag, e.g., outer VLAN tag 204 in FIG. 2. Once the second set of QoS bits have been determined, the system can generate a TRILL packet that includes the second set of QoS bits (operation 1506). The system can then send the TRILL packet to the next TRILL hop (operation 1508).

### Remote Port Mirroring

Service provider networks can be very large and complex. Not surprisingly, the network often needs to be debugged. Remote port mirroring is a technique that can be used to identify and resolve network problems.

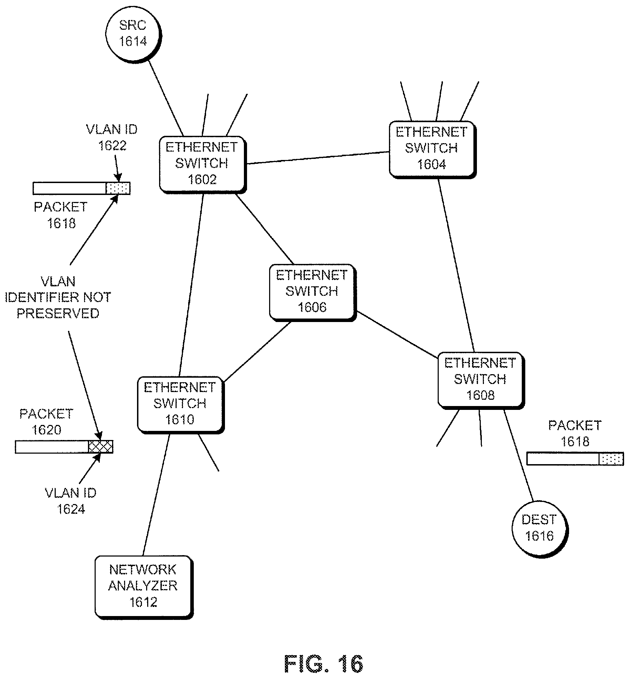

FIG. 16 illustrates a conventional remote port mirroring system. Ethernet switches 1602, 1604, 1606, 1608, and 1610 are part of a LAN (local area network). Source node 1614 is coupled to Ethernet switch 1602, and destination node 1616 is coupled to Ethernet switch 1608. Network analyzer 1612 is coupled to Ethernet switch 1610. Network analyzer 1612 can be used to analyze packets in the network to identify and resolve problems. In remote port mirroring, copies of packets that are received on a port in the network are sent to a network analyzer.

For example, remote port mirroring can be performed on the port on Ethernet switch 1602 which is coupled to source node 1614. Suppose packet 1618 with a VLAN identifier 1622 is received from source 1614 on Ethernet switch 1602. Further, assume that packet 1618 is destined for destination 1616. Note that FIG. 16 is for illustration purposes only. The packet format shown in FIG. 16 is not intended to reflect the actual packet format. For example, an Ethernet packet includes source and destination MAC addresses, which have not been shown in FIG. 16 for the sake of clarity.

Ethernet switch 1602 will forward the packet with the original VLAN identifier, i.e., VLAN identifier 1622 to destination 1616. For example, packet 1618 may traverse Ethernet switches 1602, 1606, and 1608, before being received at destination 1616. In conventional approaches, a copy of packet 1618 with a different VLAN identifier is also forwarded in the network for remote port mirroring purposes. Specifically, Ethernet switch 1602 creates packet 1620 with VLAN identifier 1624, which is different from VLAN identifier 1622. Ethernet switch 1602 then forwards packet 1620 to network analyzer 1612. Packet 1620 may traverse Ethernet switches 1602 and 1610 before being received at network analyzer 1612.

Note that VLAN identifier 1624 is used in the network to tag network analysis traffic. Replacing the original VLAN identifier with a VLAN identifier that is specifically used for network analysis traffic enables conventional networks to ensure that these packets are delivered to network analyzers.

Unfortunately, conventional port mirroring techniques may not be able to identify and/or resolve certain network problems. Specifically, since conventional networks modify the original VLAN identifier, the packet that is received at the network analyzer is not the original packet. If the original VLAN identifier was one of the causes of the network problem, the network analyzer will not be able to identify and/or resolve the network problem.

In contrast to conventional techniques, some embodiments of the present invention encapsulate the copy of the packet, and forward the encapsulated copy of the packet to a network analyzer. Since some embodiments of the present invention encapsulate the copy of the packet, they preserve the original VLAN identifier and optionally preserve other header information in the original packet.

Typically, when a packet is encapsulated to obtain an encapsulated packet, the entire contents of the packet are preserved. The encapsulated packet usually has its own header which is used for forwarding the encapsulated packet. According to one definition of encapsulation, encapsulation is a process which adds new fields to the packet header which are used for forwarding the encapsulated packet. For example, a packet can be encapsulated by adding a TRILL header to the packet which is then used for routing the packet through the network. Merely modifying the VLAN tag is not encapsulation because no new fields are added to the header, and because the original VLAN tag is not preserved.

FIG. 17A illustrates a remote port mirroring system which uses encapsulation in accordance with some embodiments of the present invention.

Suppose packet 1706 with VLAN identifier 1718 is sent from a source node in VLAN 112 in customer C3's network at site S1 to a destination node in VLAN 112 in customer C3's network at site S5.

When packet 1706 is received on port P3 of RBridge 102, packet 1706 can be encapsulated with TRILL header 1710 to obtain encapsulated packet 1708. Encapsulated packet 1708 can then be routed through TRILL network 100 to RBridge 110. RBridge 110 can then extract packet 1706 from encapsulated packet 1708, and forward packet 1706 to the destination node in VLAN 112 in customer C3's network at site S5. Note that, in the above example, packet 1706 is an Ethernet packet (with or without one or more VLAN tags), and encapsulated packet 1708 is a TRILL packet.

Some embodiments of the present invention can perform remote port mirroring at an arbitrary level of granularity, and can use arbitrarily complex criteria to determine which packets to mirror. Specifically, remote port mirroring can be enabled for packets that are received or sent on a particular port, that have a specific VLAN tag, that originate from a particular source node, that are destined for a particular destination node, or that match a combination of these criteria. In general, the system may use an arbitrarily complex logical function (e.g., an access control list) to identify packets that need to be mirrored.

Let us assume that remote port mirroring has been enabled on port P3 of RBridge 102, and packet 1706 has been identified as a packet that needs to be mirrored. In this case, RBridge 102 can create a copy of packet 1706, and encapsulate the copy of packet 1706 using TRILL header 1714 to obtain encapsulated packet 1712. Encapsulated packet 1712 can then be routed through TRILL network 100 to RBridge 106. Note that TRILL header 1714 is different from TRILL header 1710. Specifically, TRILL header 1710 causes packet 1708 to be routed to RBridge 110, whereas TRILL header 1714 causes encapsulated packet 1712 to be routed to RBridge 106. RBridge 106 can then extract the copy of packet 1706 (shown as packet 1716 in FIG. 17A) from encapsulated packet 1712, and forward the copy of packet 1706 to network analyzer 1702 which may belong to VLAN 1704. VLAN 1704 may have been specifically created for analyzing network traffic. The packet that is sent to the network analyzer may include some indication that the packet is a mirrored packet. For example, if mirrored packets have a specific VLAN identifier (e.g., VLAN 1704 as shown in FIG. 17A), then the VLAN identifier can be used to indicate that the packet is a mirrored packet.

Note that the VLAN identifier was not modified, i.e., the VLAN identifier in packet 1716 is the same as the VLAN identifier in packet 1706. In this manner, some embodiments of the present invention facilitate debugging the network by preserving VLAN identifier information during remote port mirroring.

Remote port mirroring can also be enabled on ports that are internal to the TRILL network. In these embodiments, an additional TRILL header can be added to preserve the original TRILL header.

FIG. 17B illustrates a remote port mirroring system which uses encapsulation in accordance with some embodiments of the present invention.

As before, RBridge 102 can encapsulate packet 1706 with TRILL header 1710 to obtain encapsulated packet 1708. Encapsulated packet 1708 can then be routed through TRILL network 100 to RBridge 110. RBridge 110 can then extract packet 1706 from encapsulated packet 1708, and forward packet 1706 to the destination node in VLAN 112 in customer C3's network at site S5.

Let us assume that remote port mirroring has been enabled on the port on RBridge 102 that couples RBridge 102 with RBridge 106, and packet 1708 has been identified as a packet that needs to be mirrored. In this case, RBridge 102 can create a copy of packet 1708 and encapsulate the copy of packet 1708 using TRILL header 1722 to obtain encapsulated packet 1720. Next, encapsulated packet 1720 can be routed through TRILL network 100 to RBridge 106. Note that TRILL header 1722 is different from TRILL header 1710. Specifically, TRILL header 1710 causes packet 1708 to be routed to RBridge 110, whereas TRILL header 1722 causes encapsulated packet 1720 to be routed to RBridge 106. RBridge 106 can then extract the copy of packet 1708 (shown as packet 1724 in FIG. 17B) from encapsulated packet 1720, and forward the copy of packet 1708 to network analyzer 1702 which may belong to VLAN 1704. Note that, in the above example, encapsulated packets 1708 and 1720 are TRILL packets.

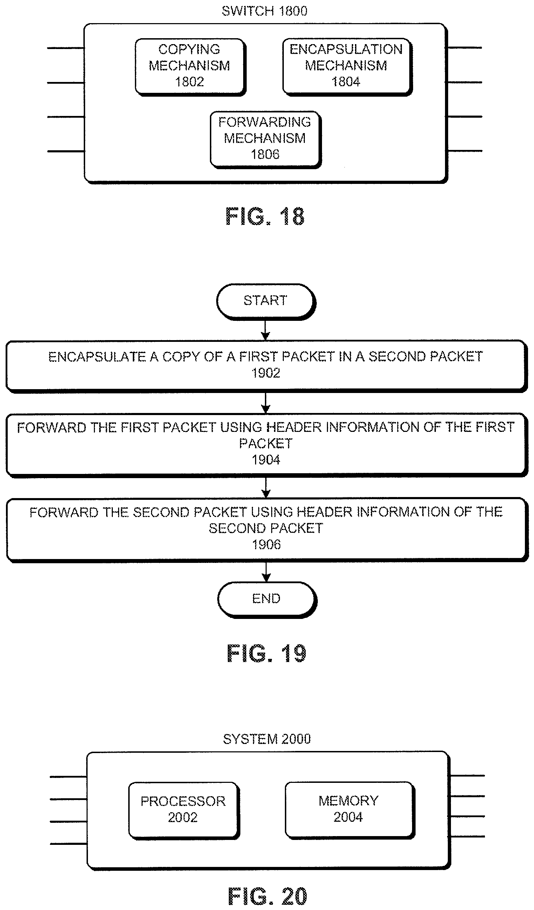

FIG. 18 illustrates a switch in accordance with some embodiments of the present invention.

Switch 1800 can include a plurality of mechanisms which may communicate with one another via a communication channel, e.g., a bus. Switch 1800 may be realized using one or more integrated circuits. In some embodiments, switch 1800 is an RBridge (e.g., RBridge 102) which includes copying mechanism 1802, encapsulation mechanism 1804, and forwarding mechanism 1806.

Switch 1800 may receive a packet which may be destined for destination address D1 (e.g., the header information of the packet may include destination address D1). Copying mechanism 1802 may be configured to create a copy of the packet. In some embodiments, copying mechanism 1802 may be configured to first identify which packets need to be mirrored, and then create copies of the identified packets. The packet that is being mirrored can be an Ethernet packet (with or without one or more VLAN tags) or a TRILL packet.

Encapsulation mechanism 1804 may be configured to encapsulate the copy of the packet to obtain an encapsulated packet which is destined for destination address D2 (e.g., the header information of the encapsulated packet may include destination address D2). In some embodiments, the encapsulated packet is a TRILL packet. Destination address D2 may or may not be the same as destination address D1. A destination address can be a unicast, a multicast, or a broadcast address. Specifically, in some embodiments, the first packet is either a unicast packet or a multicast packet, and the second packet is either a unicast packet that is sent to a network analyzer or a multicast packet which is sent to a multicast address which is associated with a multicast group that includes the network analyzer. Note that encapsulating the copy of the packet to obtain an encapsulated packet preserves header information of the original packet (e.g., VLAN identifier, TRILL header, etc.).

Forwarding mechanism 1806 may be configured to forward the original packet according to address D1, and forward the encapsulated packet according to address D2. For example, forwarding mechanism 1806 may first perform a forwarding lookup (e.g., by performing a lookup in a ternary context addressable memory) for addresses D1 and D2 to determine the output ports for the two packets. Next, forwarding mechanism 1806 may queue the packets to be sent through the appropriate output ports.

Note that FIG. 18 is for illustration purposes only, and is not intended to limit the present invention to the forms disclosed. Specifically, in some embodiments, switch 1800 may not be an RBridge, and/or may include fewer or more mechanisms than those shown in FIG. 18.

FIG. 19 presents a flowchart that illustrates a process for performing remote port mirroring in accordance with some embodiments of the present invention.

The process can be performed by a switch, e.g., RBridge 102. The switch may receive a first packet, e.g., packet 1706. The switch may then determine whether the first packet is to be mirrored. If the first packet is to be mirrored, the switch may create a copy of the first packet.

Next, the switch may encapsulate the copy of the first packet in a second packet, e.g., packet 1712 (operation 1902). Note that the first packet and second packet may be destined for different addresses. The first packet and the second packet can be unicast, multicast, or broadcast packets. Specifically, in some embodiments, the first packet is either a unicast packet or a multicast packet, and the second packet is either a unicast packet that is sent to a network analyzer or a multicast packet which is sent to a multicast address which is associated with a multicast group that includes the network analyzer.

The switch can then forward the first packet using header information of the first packet (operation 1904), and forward the second packet using the header information of the second packet (operation 1906). Note that operations 1904 and 1906 may be performed sequentially (in any order) or concurrently.

FIG. 20 illustrates a system in accordance with some embodiments of the present invention.

System 2000 can include processor 2002 (e.g., a network processor) and memory 2004. Processor 2002 may be capable of accessing and executing instructions stored in memory 2004. For example, processor 2002 and memory 2004 may be coupled by a bus. Memory 2004 may store instructions that when executed by processor 2002 cause system 2000 to perform one or more processes that are explicitly or implicitly disclosed in this disclosure.

In some embodiments, memory 2004 may store instructions for determining an internal virtual network identifier and/or an internal policy identifier for a packet based on a port on which the packet is received and/or one or more fields in the packet's header, for encapsulating the packet in a TRILL packet by adding a TRILL header, for forwarding the packet based on the internal virtual network identifier, and/or for processing the packet based on the internal policy identifier.

In some embodiments, memory 2004 may store instructions for receiving a multicast packet, determining an internal multicast group identifier for a multicast packet based on a source address, a multicast address, and a multicast tree identifier field associated with the multicast packet, and forwarding the multicast packet based on the internal multicast group identifier. Further, memory 2004 may optionally store instructions for encapsulation and/or decapsulation.

In some embodiments, the multicast packet can include a network-layer multicast-address and it may be received on a first multicast tree associated with a first virtual network. Memory 2004 may store instructions for determining, based on the network-layer multicast-address, a second multicast tree associated with a second virtual network over which the multicast packet is to be forwarded. In these embodiments, memory 2004 may also store instructions for forwarding the multicast packet on the first multicast tree associated with the first virtual network, and forwarding a copy of the multicast packet on the second multicast tree associated with the second virtual network.

In some embodiments, memory 2004 may store instructions for performing a forwarding lookup operation based on one or more fields in a packet's header, determining a set of egress ports based on a virtual network identifier in the packet's header if the lookup operation fails, and flooding the packet over the set of egress ports.

In some embodiments, memory 2004 may store instructions for mapping a first set of QoS bits in a packet to a second set of QoS bits for use in a TRILL packet which encapsulates the first packet, wherein the first set of QoS bits is different from the second set of QoS bits.

In some embodiments, memory 2004 may store instructions for encapsulating a copy of a first packet in a second packet, instructions for forwarding the first packet using header information of the first packet, and instructions for forwarding the second packet using header information of the second packet.

The data structures and code described in this disclosure can be partially or fully stored on a non-transitory computer-readable storage medium and/or a hardware module and/or a hardware apparatus. A computer-readable storage medium includes, but is not limited to, volatile memory, non-volatile memory, magnetic and optical storage devices such as disk drives, magnetic tape, CDs (compact discs), DVDs (digital versatile discs or digital video discs), or other non-transitory media, now known or later developed, that are capable of storing code and/or data. Hardware modules or apparatuses described in this disclosure include, but are not limited to, application-specific integrated circuits (ASICs), field-programmable gate arrays (FPGAs), dedicated or shared processors, and/or other hardware modules or apparatuses now known or later developed. Specifically, the methods and/or processes may be described in a hardware description language (HDL) which may be compiled to synthesize register transfer logic (RTL) circuitry which can perform the methods and/or processes.

The methods and processes described in this disclosure can be partially or fully embodied as code and/or data stored in a computer-readable storage medium or device, so that when a computer system reads and/or executes the code and/or data, the computer system performs the associated methods and processes. The methods and processes can also be partially or fully embodied in hardware modules or apparatuses, so that when the hardware modules or apparatuses are activated, they perform the associated methods and processes. Further, the methods and processes can be embodied using a combination of code, data, and hardware modules or apparatuses.

The foregoing descriptions of embodiments of the present invention have been presented only for purposes of illustration and description. They are not intended to be exhaustive or to limit the present invention to the forms disclosed. Accordingly, many modifications and variations will be apparent to practitioners having ordinary skill in the art. Additionally, the above disclosure is not intended to limit the present invention. The scope of the present invention is defined by the appended claims.

## Claims

1. A switch (1800), comprising:
encapsulation circuitry (1804) configured to encapsulate a first packet (1706) in a second packet (1708) and a copy of the first packet (1706) in a third packet (1712) using Transparent Interconnection of Lots of Links, TRILL, encapsulation; and
forwarding circuitry (1806) configured to:
determine an output port for the second packet (1708) using TRILL header information of the second packet (1708), wherein destination information of the second packet (1708) corresponds to destination information of the first packet (1706), and
determine an output port for the third packet (1712) using TRILL header information of the third packet (1712),
wherein a TRILL header (1714) of the third packet (1712) is different to a TRILL header (1710) of the second packet (1708) and destination information of the third packet (1712) is different from the destination information of the first and second packets (1706, 1708) and is based on port mirroring,
wherein while encapsulating the first packet (1706) in the second packet (1708) and the copy of the first packet (1706) in the third packet (1712), the encapsulation circuitry is configured to preserve Virtual Local Area Network, VLAN, identifiers of the first packet (1706) and the copy of the first packet (1706).

2. The switch (1800) of claim 1, wherein the second packet (1708) is a unicast packet.

3. The switch (1800) of claim 2, wherein the third packet (1712) is a multicast packet.

4. The switch (1800) of claim 1, wherein the encapsulation circuitry (1804) is further configured to encapsulate a copy of the second packet (1708) in a fourth packet using TRILL encapsulation.

5. A method comprising:
encapsulating a first packet (1706) in a second packet (1708) and a copy of the first packet (1706) in a third packet (1712) using Transparent Interconnection of Lots of Links, TRILL, encapsulation;
determining an output port for the second packet (1708) using TRILL header information of the second packet (1708), wherein destination information of the second packet (1708) corresponds to destination information of the first packet (1706); and
determining an output port for the third packet (1712) using TRILL header information of the third packet (1712),
wherein a TRILL header (1714) of the third packet (1712) is different to a TRILL header (1710) of the second packet (1708) and destination information of the third packet (1712) is different from the destination information of the first and second packets (1706, 1708) and is based on port mirroring,
wherein, while encapsulating the first packet (1706) in the second packet (1708) and the copy of the first packet (1706) in the third packet (1712), Virtual Local Area Network, VLAN, identifiers of the first packet (1706) and the copy of the first packet (1706) are preserved.

## Patentansprüche

1. Switch (1800), der aufweist:
Einkapselungsschaltung (1804), die dazu konfiguriert ist, mittels Transparent Interconnection of Lots of Links, TRILL, -Einkapselung ein erstes Paket (1706) in ein zweites Paket (1708) und eine Kopie des ersten Pakets (1706) in ein drittes Paket (1712) einzukapseln; und
Weiterleitungsschaltung (1806), die konfiguriert ist zum:
Bestimmen eines Ausgangsports für das zweite Paket (1708) unter Verwendung von TRILL-Headerinformationen des zweiten Pakets (1708), wobei Zielinformationen des zweiten Pakets (1708) Zielinformationen des ersten Pakets (1706) entsprechen, und
Bestimmen eines Ausgangsports für das dritte Paket (1712) unter Verwendung von TRILL-Headerinformationen des dritten Pakets (1712), wobei sich ein TRILL-Header (1714) des dritten Pakets (1712) von einem TRILL-Header (1710) des zweiten Pakets (1708) unterscheidet und Zielinformationen des dritten Pakets (1712) sich von den Zielinformationen des ersten und des zweiten Pakets (1706, 1708) unterscheiden und auf Portspiegelung basieren,
wobei während des Einkapselns des ersten Pakets (1706) in das zweite Paket (1708) und der Kopie des ersten Pakets (1706) in das dritte Paket (1712) die Einkapselungsschaltung dazu konfiguriert ist, Virtual Local Area Network, VLAN, -Kennungen des ersten Pakets (1706) und der Kopie des ersten Pakets (1706) beizubehalten.

2. Switch (1800) nach Anspruch 1, wobei das zweite Paket (1708) ein Unicast-Paket ist.

3. Switch (1800) nach Anspruch 2, wobei das dritte Paket (1712) ein Multicast-Paket ist.

4. Switch (1800) nach Anspruch 1, wobei die Einkapselungsschattung (1804) des Weiteren dazu konfiguriert ist, eine Kopie des zweiten Pakets (1708) mittels TRILL-Einkapselung in ein viertes Paket einzukapseln.

5. Verfahren, das umfasst:
Einkapseln eines ersten Pakets (1706) in ein zweites Paket (1708) und einer Kopie des ersten Pakets (1706) in ein drittes Paket (1712) mittels Transparent Interconnection of Lots of Links, TRILL, -Einkapselung;
Bestimmen eines Ausgangsports für das zweite Paket (1708) unter Verwendung von TRILL-Headerinformationen des zweiten Pakets (1708), wobei Zielinformationen des zweiten Pakets (1708) Zielinformationen des ersten Pakets (1706) entsprechen, und
Bestimmen eines Ausgangsports für das dritte Paket (1712) unter Verwendung von TRILL-Headerinformationen des dritten Pakets (1712), wobei sich ein TRILL-Header (1714) des dritten Pakets (1712) von einem TRILL-Header (1710) des zweiten Pakets (1708) unterscheidet und Zielinformationen des dritten Pakets (1712) sich von den Zielinformationen des ersten und des zweiten Pakets (1706, 1708) unterscheiden und auf Portspiegelung basieren,
wobei während des Einkapselns des ersten Pakets (1706) in das zweite Paket (1708) und der Kopie des ersten Pakets (1706) in das dritte Paket (1712) Virtual Local Area Network, VLAN, -Kennungen des ersten Pakets (1706) und der Kopie des ersten Pakets (1706) beibehalten werden.

## Revendications

1. Commutateur (1800), comprenant :
des circuits d'encapsulation (1804) conçus pour encapsuler un premier paquet (1706) dans un deuxième paquet (1708) et une copie du premier paquet (1706) dans un troisième paquet (1712) à l'aide d'une encapsulation d'une interconnexion transparente d'un grand nombre de liaisons, TRILL ; et
des circuits de transmission (1806) conçus pour :
déterminer un port de sortie pour le deuxième paquet (1708) à l'aide des informations d'en-tête TRILL du deuxième paquet (1708), les informations de destination du deuxième paquet (1708) correspondant aux informations de destination du premier paquet (1706), et
déterminer un port de sortie pour le troisième paquet (1712) à l'aide d'informations d'en-tête TRILL du troisième paquet (1712),
dans lequel un en-tête TRILL (1714) du troisième paquet (1712) est différent d'un en-tête TRILL (1710) du deuxième paquet (1708) et les informations de destination du troisième paquet (1712) sont différentes des informations de destination des premier et deuxième paquets (1706, 1708) et sont basées sur une duplication de ports,
dans lequel, tout en encapsulant le premier paquet (1706) dans le deuxième paquet (1708) et la copie du premier paquet (1706) dans le troisième paquet (1712), les circuits d'encapsulation sont conçus pour préserver des identifiants de réseau local virtuel, VLAN, du premier paquet (1706) et la copie du premier paquet (1706).

2. Commutateur (1800) selon la revendication 1, dans lequel le deuxième paquet (1708) est un paquet d'unidiffusion.

3. Commutateur (1800) selon la revendication 2, dans lequel le troisième paquet (1712) est un paquet de multidiffusion.

4. Commutateur (1800) selon la revendication 1, dans lequel les circuits d'encapsulation (1804) sont conçus en outre pour encapsuler une copie du deuxième paquet (1708) dans un quatrième paquet à l'aide d'une encapsulation TRILL.

5. Procédé comprenant :
l'encapsulation d'un premier paquet (1706) dans un deuxième paquet (1708) et une copie du premier paquet (1706) dans un troisième paquet (1712) à l'aide d'une encapsulation d'une interconnexion transparente d'un grand nombre de liaisons, TRILL ;
la détermination d'un port de sortie pour le deuxième paquet (1708) à l'aide des informations d'en-tête TRILL du deuxième paquet (1708), les informations de destination du deuxième paquet (1708) correspondant aux informations de destination du premier paquet (1706), et
la détermination d'un port de sortie pour le troisième paquet (1712) à l'aide d'informations d'en-tête TRILL du troisième paquet (1712),
dans lequel un en-tête TRILL (1714) du troisième paquet (1712) est différent d'un en-tête TRILL (1710) du deuxième paquet (1708) et les informations de destination du troisième paquet (1712) sont différentes des informations de destination des premier et deuxième paquets (1706, 1708) et sont basées sur une duplication de ports,
dans lequel, tout en encapsulant le premier paquet (1 706) dans le deuxième paquet (1708) et la copie du premier paquet (1706) dans le troisième paquet (1712), des identifiants de réseau local virtuel, VLAN, du premier paquet (1706) et la copie du premier paquet (1706) sont préservés.
